## Europäisches Patentamt

## European Patent Office

## Office européen des brevets

(19)

(11) Veröffentlichungsnummer: **0 281 659**
**B1**

(12) **EUROPÄISCHE PATENTSCHRIFT**

(45) Veröffentlichungstag der Patentschrift:
**27.09.89**

(51) Int. Cl.⁴: **H04N 1/40**

(21) Anmeldenummer: **87103652.1**

(22) Anmeldetag: **13.03.87**

(54) Verfahren und Einrichtung zum Weiss-Abgleich.

(43) Veröffentlichungstag der Anmeldung:
**14.09.88 Patentblatt 88/37**

(45) Bekanntmachung des Hinweises auf die Patenterteilung:
**27.09.89 Patentblatt 89/39**

(84) Benannte Vertragsstaaten:
**DE FR GB**

(56) Entgegenhaltungen:
**EP-A- 0 180 391**
**DE-A- 2 545 961**
**DE-A- 3 432 176**
**GB-A- 2 148 658**

**PATENT ABSTRACTS OF JAPAN, Band 6,
Nr. 37 (E-97)[915], 6. März 1982 & JP-A-56 156 070**

(73) Patentinhaber: **Dr.-Ing. Rudolf Hell GmbH,
Grenzstrasse 1-5, D-2300 Kiel 14(DE)**

(72) Erfinder: **Schulz-Hennig, Jörg, Gartenweg 7,
D-2305 Heikendorf(DE)**
Erfinder: **Rohardt, Jürgen, Jungfernstieg 33,
D-2300 Kiel 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf das Gebiet der elektronischen Reproduktionstechnik und betrifft ein Verfahren und eine Einrichtung zum Weiß-Abgleich der Abtastorgane von Reproduktionsgeräten, insbesondere von Schwarz/Weiß-Scannern und Farb-Scannern zur Herstellung von Druckformen.

Bei einem Schwarz/Weiß-Scanner wird eine auf einer rotierenden Abtasttrommel angeordnete schwarzweiße Vorlage von einer Abtast-Lichtquelle punkt- und zeilenweise abgetastet, und das durch die Tonwerte der abgetasteten Bildpunkte der Vorlage modulierte Abtastlicht in einem Abtastorgan durch einen optisch-elektrischen Wandler, z. B. durch einen Fotomultiplier, in ein Bildsignal umgewandelt, welches die Tonwerte zwischen "Schwarz" und "Weiß" repräsentiert. Das Bildsignal wird dann nach einer vorgegebenen Gradationskurve modifiziert, deren Eckpunkte die Tonwerte "Schwarz" und "Weiß" markieren, und deren Verlauf zwischen den Eckpunkten von den Druckparametern für den späteren Druck und von den gewünschten Tonwert-Änderungen der Reproduktion gegenüber der Vorlage abhängig ist. Das modifizierte Bildsignal steuert die Helligkeit eines Aufzeichnungsorgans, das einen Film punkt- und zeilenweise belichtet. Der belichtete und entwickelte Film dient zur Herstellung der Druckform für den späteren Druck der Vorlage.

Bei einem Farb-Scanner wird das durch die punkt- und zeilenweise Abtastung einer farbigen Vorlage gewonnene Abtastlicht mittels dichroitischer Filter in drei Farbanteile aufgespalten, die durch drei optisch-elektrische Wandler in Farbsignale umgewandelt werden. Die Farbsignale werden ebenfalls nach Gradationskurven modifiziert und dann in einem Farbkorrektur-Rechner in die Farbauszugssignale zur Aufzeichnung der Farbauszüge umgesetzt, von denen die Druckformen für den späteren Mehrfarbendruck der Vorlage angefertigt werden.

Zur Normierung des Reproduktionsprozesses sind den Eckpunkten der Gradationskurve feste Bezugssignalwerte, Weißpegel und Schwarzpegel genannt, zugeordnet. Bezogen auf den Weißpegel muß durch einen sogenannten Weiß-Abgleich dafür gesorgt werden, daß das von einem Weiß-Normal ausgehende maximale Abtastlicht in dem Fotomultiplier stets in einen Bildsignalwert umgesetzt wird, der dem normierten Weißpegel entspricht, was durch entsprechende Einstellung der Empfindlichkeit bzw. des Verstärkungsgrades des optisch-elektrischen Wandlers erreicht wird.

Als Weiß-Normale werden in der Praxis üblicherweise die hellsten Bildstellen (Weißpunkte) der abzutastenden Vorlagen verwendet, wobei das vom Weißpunkt ausgehende Abtastlicht dem um den jeweiligen Dichtewert des Weißpunktes abgeschwächten Licht der Abtast-Lichtquelle entspricht.

Da das von dem jeweiligen Weißpunkt ausgehende Abtastlicht von Vorlage zu Vorlage und je nach Art des Vorlagenträgers (Filmmaterial bei Durchsichts-Vorlagen und Fotopapier bei Aufsichts-Vorlagen) variiert und da die Empfindlichkeit der verwendeten optisch-elektrischen Wandler nicht über einen längeren Zeitraum konstant gehalten werden kann, wird in der Praxis grundsätzlich vor jeder Vorlagen-Abtastung ein Weiß-Abgleich durchgeführt. Dieser Weiß-Abgleich ist insbesondere bei Farb-Scannern aufwendig, da dort mindestens drei optisch-elektrische Wandler abgeglichen werden müssen.

Um die für den Weiß-Abgleich benötigte Zeit gegenüber der eigentlichen Abtastzeit für die Vorlagen klein zu halten, hat man versucht, den Weiß-Abgleich möglichst zu automatisieren.

Ein solcher automatischer Weiß-Abgleich ist beispielsweise aus der DE-A-25 45 961 bekannt. Dort wird das Abtastorgan auf dem jeweiligen Weißpunkt der abzutastenden Vorlage positioniert und das von dem Weißpunkt ausgehende Abtastlicht im Fotomultiplier in einen Bildsignalwert als Istwert für eine Regeleinrichtung umgesetzt. In der Regeleinrichtung wird der gemessene Istwert mit einem dem Weißpegel entsprechenden Sollwert verglichen und die Empfindlichkeit bzw. der Verstärkungsgrad des Fotomultipliers über die Versorgungs-Hochspannung solange verändert, bis der Istwert dem Sollwert entspricht.

Das bekannte Verfahren hat den Nachteil, daß das dem WeißNormal entsprechende Abtastlicht durch Abtastung entsprechender Vorlagen-Weißpunkte erzeugt werden muß. Um einen genauen und reproduzierbaren Weiß-Abgleich zu erreichen, muß das Abtastorgan von dem Bediener möglichst genau, und das auch bei Wiederholungen des Abgleich-Vorganges, auf dem Weißpunkt positioniert werden, was umständlich und zeitraubend ist. Hinzu kommt, daß in einer farbigen Vorlage oft keine als Weißpunkt geeignete weiße Vorlagenstelle vorhanden ist oder daß die hellste Vorlagenstelle einen Farbstich hat, der bei der Reproduktion nicht kompensiert werden soll.

Es ist auch schon bekannt, das für den Weiß-Abgleich benötigte Weiß-Normal nicht durch Abtastung eines Vorlagen-Weißpunktes, sondern durch Abtastung eines auf der Abtasttrommel aufgebrachten Verlaufsgraukeils zu erzeugen, wobei der Grad der Abschwächung des Lichts der Abtast-Lichtquelle zur Simulierung des Abtastlichtes eines Weißpunktes durch den gewählten Dichtewert des Verlaufsgraukeils festgelegt wird. Die Verwendung eines Verlaufsgraukeils beim Weiß-Abgleich ist umständlich und hat außerdem den Nachteil, daß der Weiß-Abgleich aufgrund einer Beschädigung oder Verschmutzung des Verlaufsgraukeils fehlerhaft sein kann.

Es ist ferner bekannt, beim Weiß-Abgleich zur Lichtabschwächung in den Strahlengang des Abtastorgans Graufilter einzuschwenken. Da selbst gute Graufilter spektrale Transmissionsunterschiede aufweisen, kann es beim Weiß-Abgleich in Farb-Scannern zu störenden Farbverschiebungen kommen, wodurch insbesondere die Reproduktion von neutralen Tönen verfälscht wird. Die spektralen Transmissionsunterschiede der Graufilter lassen sich nicht durch Kalibriermessungen eliminieren.

Der Erfindung liegt somit die Aufgabe zugrunde, die genannten Nachteile beim herkömmlichen Weiß-Abgleich zu vermeiden und ein Verfahren und eine Einrichtung anzugeben, mit denen ohne Weißpunkt-Abtastung in einer Vorlage und ohne Verwendung von Verlaufsgraukeilen und Graufiltern ein schneller, genauerer und farbneutraler Weiß-Abgleich durchgeführt werden kann.

Diese Aufgabe wird in bezug auf das Verfahren durch die Merkmale der Ansprüche 1 und 22 und in bezug auf die Einrichtung durch die Merkmale der Ansprüche 14 und 34 gelöst.

Aus der DE-A-34 32 176 ist zwar auch schon ein Abgleich-Verfahren für das Abtastorgan eines Reproduktionsgerätes bekannt, dem aber eine andere Aufgabenstellung zugrunde liegt. Dort geht es um den Abgleich bei unterschiedlichen Öffnungen der Abtast-Blende, die entsprechend den gewünschten Abtastfeinheiten gewählt werden und um Maßnahmen, welche die Zerstörung der Fotomultiplier bei zu starkem Lichteinfall vermeiden sollen.

Die Erfindung wird im folgenden anhand der Figuren 1 bis 5 näher erläutert. Es zeigen:

Fig. 1 ein Ausführungsbeispiel für eine Einrichtung zum automatischen Weiß-Abgleich bei einem Schwarz/Weiß-Abtastorgan;
Fig. 2 eine Weiterbildung der Einrichtung nach Fig. 1;
Fig. 3 eine Variante der in den Fig. 1 und 2 dargestellten Einrichtungen;
Fig. 4 ein weiteres Ausführungsbeispiel für die Einstellung der Irisblende; und
Fig. 5 ein Ausführungsbeispiel für eine Einrichtung zum automatischen Weiß-Abgleich bei einem FarbAbtastorgan.

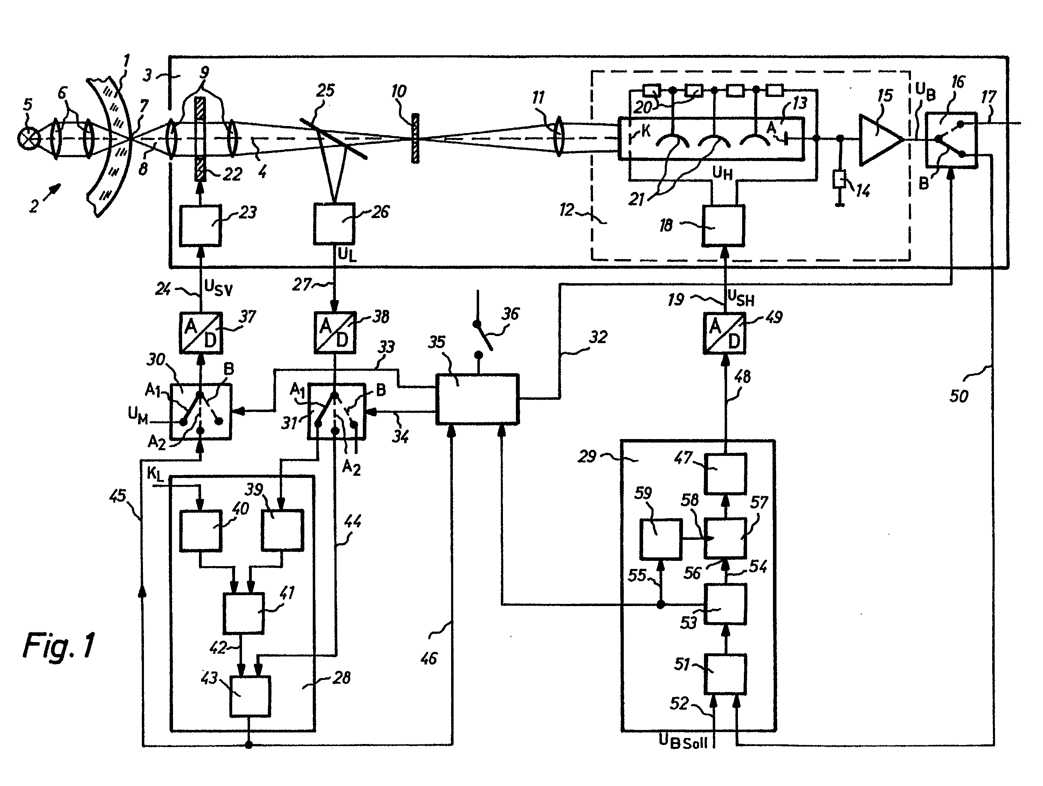

Fig. 1 zeigt ein Ausführungsbeispiel für eine Einrichtung zum automatischen Weiß-Abgleich eines Schwarz/Weiß-Abtastorgans in einem Schwarz/Weiß-Scanner.

Von dem Schwarz/Weiß-Scanner sind in Schnittbildern lediglich eine Abtasttrommel 1, eine Abtast-Beleuchtung 2 und ein Abtastorgan 3 entlang einer optischen Achse 4 dargestellt. Während der eigentlichen Vorlagen-Abtastung nimmt die Abtasttrommel 1, die aus Klarglas gefertigt ist, die zu reproduzierende Durchsichts-Vorlage oder Aufsichts-Vorlage auf. Die dargestellte Abtast-Beleuchtung 2 für Durchsichts-Abtastung befindet sich im Inneren der transparenten Abtasttrommel 1 und besteht aus einer Lichtquelle 5, die mit Hilfe einer Optik 6 auf der Oberfläche der transparenten Abtasttrommel 1 bzw. auf der nicht dargestellten Durchsichts-Vorlage einen Lichtpunkt 7 zur bildpunkt- und zeilenweisen Abtastung der Durchsichts-Vorlage erzeugt. Bei Aufsichts-Abtastung befindet sich die Abtast-Beleuchtung 2 außerhalb der Abtasttrommel 1. Das durch die Durchsichts-Vorlage hindurchgetretene oder das von der Aufsichts-Vorlage reflektierte Abtastlicht 8 ist entsprechend den Dichtewerten der abgetasteten Bildpunkte helligkeitsmoduliert, wobei das Abtastlicht 8 bei Abtastung einer hellen Bildstelle der Vorlage, dem Weißpunkt, einen maximalen und bei Abtastung der dunkelsten Bildstelle, dem Schwarzpunkt, einen minimalen Wert hat. Anders ausgedrückt erfährt das von der Lichtquelle 5 abgegebene Licht entsprechend den Dichtewerten des Weißpunktes die geringste und entsprechend dem Dichtewert des Schwarzpunktes die größte Abschwächung.

Das helligkeitsmodulierte Abtastlicht 8 gelangt in das Abtastorgan 3 und wird dort mittels eines Abtast-Objektivs 9 auf einer Abtast-Blende 10 abgebildet, deren Blendenöffnung entsprechend der gewünschten Abtastfeinheit bei der Vorlagen-Abtastung gewählt ist. Das durch die Blendenöffnung der Abtast-Blende 10 begrenzte Abtastlicht 8 wird durch eine Kollimations-Optik 11 auf die lichtempfindliche Fläche einer Licht/Spannungs-Wandlereinrichtung 12 geworfen, deren Empfindlichkeit bzw. Verstärkungsgrad einstellbar ist. Im Ausführungsbeispiel weist die Licht/Spannungs-Wandlereinrichtung 12 einen Fotomultiplier 13 auf, der das auf die Fotokatode K auftreffende Abtastlicht 8 in einen Anodenstrom an der Anode A umwandelt. Der Anodenstrom wird durch einen gegen Massepotential geschalteten Arbeitswiderstand 14 in eine Spannung umgesetzt. Die in einem nachgestalteten Verstärker 15 verstärkte Spannung ist das Bildsignal $U_B$, das über eine Schalt-Stufe 16 und eine Leitung 17 einer nicht dargestellten Bildsignal-Verarbeitungsschaltung des Schwarz/Weiß-Scanners zugeführt wird.

Dabei ist während der Vorlagen-Abtastung die Empfindlichkeit des Fotomultipliers 13 durch einen vorangegangenen Weiß-Abgleich so eingestellt, daß das Bildsignal $U_B$ bei Abtastung des Weißpunktes in der Vorlage dem Bezugssignalwert (Weißpegel) entspricht.

Zwischen Katode K und Anode A des Fotomultipliers 13 liegt eine für den Betrieb erforderliche Hochspannung $U_H$, mit der die Empfindlichkeit des Fotomultipliers 13 durch Änderung seines Verstärkungsgrades eingestellt wird. Die Hochspannung $U_H$ wird in einem Hochspannungs-Generator 18 erzeugt. Durch ein Hochspannungs-Steuersignal $U_{SH}$, das dem Hochspannungs-Generator 18 über eine Leitung 19 zugeführt wird, läßt sich die Hochspannung $U_H$ und damit die Empfindlichkeit des Fotomultipliers 13 einstellen. Zwischen Katode K und Anode A des Fotomultipliers 13 ist ein Spannungsteiler 20 für die Hochspannung $U_H$ geschaltet. Die mit dem Spannungsteiler 20 erzeugten Teilspannungen werden an die einzelnen Dynoden 21 des Fotomultipliers 13 geführt.

Nachdem der Aufbau des Abtastorgans 3 und seine Wirkungsweise bei der Vorlagen-Abtastung erläutert ist, soll der Weiß-Abgleich beschrieben werden, der jeweils vor der eigentlichen Vorlagen-Abtastung an einer Stelle auf der Abtasttrommel 1, an der sich keine Vorlage befindet, durchgeführt wird.

Zur Durchführung des erfindungsgemäßen Weiß-Abgleichs befindet sich im Strahlengang des Abtastorgans 3 in der Nähe der Pupillenebene des Abtast-Objektivs 9, vorzugsweise in der Pupillenebene, ein steuerbarer Lichtabschwächer. Durch den Lichtabschwächer wird das von der Lichtquelle 5 kommende Licht um einen Abschwächungsfaktor $K_L$ abgeschwächt, der dem Transmissionsgrad des Weißpunktes in der zu reproduzierenden Durchsichts-Vorlage oder dem Reflexionsgrad des Weißpunktes in der Aufsichts-Vorlage entsprechen würde. Auf diese Weise wird für die Einstellung der Empfindlichkeit des Fotomultipliers 13 ohne Weißpunkt-Abtastung in der jeweiligen Vorlage Licht mit einer Lichtleistung erzeugt, die der Lichtleistung des vom Weißpunkt ausgehenden Abtastlichts entspricht.

Als steuerbarer Lichtabschwächer wird im Ausführungsbeispiel eine Irisblende 22 verwendet, deren Blendenöffnung mit Hilfe eines Stellmotors 23 veränderbar ist. Der Stellmotor 23 wird von einem Verstell-Steuersignal $U_{SV}$ auf einer Leitung 24 gesteuert, dessen Betrag die Geschwindigkeit und dessen Vorzeichen die Richtung der Verstellung bestimmt.

Außerdem befindet sich im Strahlengang des Abtastorgans 3 zwischen Irisblende 22 und Fotomultiplier 13 ein teildurchlässiger Spiegel 25, der einen Teil des Lichts auf eine Lichtmeß-Stufe 26 ausspiegelt. In der Lichtmeß-Stufe 26 wird die Lichtleistung des Lichts als Spannung $U_L$ auf einer Leitung 27 gemessen.

Zur Steuerung der Lichtabschwächung durch die Irisblende 22 ist eine Lichtregelungs-Stufe 28 vorhanden, in der das Verstell-Steuersignal $U_{SV}$ für den Stellmotor 23 auf der Leitung 24 erzeugt wird.

Zur Einstellung der Empfindlichkeit bzw. des Verstärkungsgrades des Fotomultipliers 13 ist eine Spannungsregelungs- Stufe 29 vorgesehen, mit der das Hochspannungs-Steuersignal $U_{SH}$ auf der Leitung 19 gewonnen wird. Ferner sind zwei Schalt-Stufen 30 und 31 vorhanden. Die Schalt-Stufen 16 im Signalweg des Bildsignals $U_B$ und die Schalt-Stufen 30 und 31, in der Figur durch Umschalter symbolisiert, werden während des Weiß-Abgleichs von Schaltsignalen auf Leitungen 32, 33 und 34 betätigt. Die Schaltsignale werden in einem Zeitgeber 35 gewonnen, der zu Beginn des Weiß-Abgleichs durch Betätigen einer Taste 36 aktiviert wird.

Nachfolgend werden die Wirkungsweisen der einzelnen Stufen während des Weiß-Abgleichs näher beschrieben.

In einer Phase A wird zunächst die Lichtabschwächung mit Hilfe der Irisblende 22 durchgeführt. Dazu wird in einem ersten Schritt $A_1$ das durch die geöffnete Irisblende 22 fallende Licht mit der Lichtmeß-Stufe 26 als Lichtleistung $U_{LO}$ gemessen. Im Falle einer Durchsichts-Abtastung entspricht die Lichtleistung der durch die transparente Abtasttrommel 1 hindurchtretenden Lichtleistung der Lichtquelle 5. Im Falle einer Aufsichts-Abtastung entspricht sie der von einem Reflektionsnormal auf der Abtasttrommel 1 reflektierte Lichtleistung einer sich über der Abtasttrommel 1 befindlichen Lichtquelle.

Die Schalter der Schalt-Stufen 30 und 31 befinden sich dann in der Position $A_1$. Über den Schalter der Schalt-Stufe 30, einen D/A-Wandler 37 und die Leitung 24 wird ein digitaler Spannungswert $U_M$ an den Stellmotor 23 gegeben, wodurch die Irisblende 22 voll geöffnet wird. Die Lichtmeß-Stufe 26 mißt die analoge Lichtleistung $U_{LO}$ für die geöffnete Irisblende 22, die in einem A/D-Wandler 38 digitalisiert und über den Schalter der Schalt-Stufe 31 in einem Register 39 der Licht regelungs-Stufe 28 gespeichert wird. In einem Register 40 der Lichtregelungs-Stufe 28 ist derjenige Abschwächungsfaktor $K_L$ abgelegt, der dem Transmissionsgrad oder Reflexionsgrad des Weißpunktes der zu reproduzierenden Aufsichts- oder Durchsichts-Vorlage entspricht. Selbstverständlich können auch mehrere Register vorgesehen sein, in denen die Abschwächungsfaktoren $K_L$ für eine Vielzahl von Vorlagen abgelegt sind, von denen jeweils der aktuelle Abschwächungsfaktor $K_L$ für die gerade zu reproduzierende Vorlage ausgewählt wird. Die Transmissionsgrade oder Reflexionsgrade der zu reproduzierenden Vorlagen werden im Zuge der Vorlagen-Aufbereitung beispielsweise an einem Arbeitsvorbereitungsplatz (AV-Platz) meßtechnisch erfaßt und dann mit anderen Reproduktionsparametern der Vorlagen archiviert. In einer Multiplizier-Stufe 41 wird die gemessene Lichtleistung $U_{LO}$ für die geöffnete Irisblende 22 mit dem Abschwächungsfaktor $K_L$ gemäß Gleichung (1) multipliziert, um den Lichtleistungs-Sollwert $U_{LSoll}$ für die erforderliche Lichtabschwächung zu erhalten.

$$U_{LSoll} = K_L \cdot U_{LO} \quad (1)$$

Der Lichtleistungs-Sollwert $U_{LSoll}$ wird über eine Leitung 42 einer Subtrahier-Stufe 43 zugeführt.

In einem zweiten Schritt $A_2$ wird die Blendenöffnung der Irisblende 22 unter laufender Messung des abgeschwächten Lichts als Lichtleistungs-Istwert $U_{LIst}$ solange verkleinert, bis das abgeschwächte Licht dem Lichtleistungs-Sollwert $U_{LSoll}$ entspricht. Dazu befinden sich die Schalter der Schalt-Stufen 30 und 31 in der Position $A_2$. Der gemessene Lichtleistungs-Istwert $U_{LIst}$ gelangt über den A/D-Wandler 38, die Schalt-Stufe 31 und eine Leitung 44 auf die Subtrahier-Stufe 43 der Lichtregelungs-Stufe 28. In der Subtrahier-Stufe 43 wird laufend die Differenz zwischen gemessenem Lichtleistungs-Istwert $U_{LIst}$ und dem berechneten Lichtleistungs-Sollwert $U_{LSoll}$ festgestellt und als Verstell-Steuersignal $U_{SV}$ über eine Leitung 45, die Schalt-Stufe 30, den D/A-Wandler 37 und die Leitung 24 an den Stellmotor 23 für die Irisblende 22 gegeben. Dadurch wird die Blendenöffnung der Irisblende 22 solange verkleinert, bis die Differenz Null ist. Die Differenz Null wird über eine Leitung 46 an den Zeitgeber 35 signalisiert, der die Schalter der Schalt-Stufen 30, 31 und 16 in die Position B umschaltet, wodurch die nachfolgende Phase B eingeleitet wird.

Durch die Position B des Schalters der Schalt-Stufe 30 wird der Stellmotor 23 stillgesetzt, wodurch die im Schritt $A_2$ eingestellte Blendenöffnung der Irisblende 22 für die Dauer der Phase B fixiert wird.

In der Phase B erfolgt die Einstellung der Empfindlichkeit bzw. der Hochspannung des Fotomultipliers 13 in der Weise, daß das durch die Irisblende 22 abgeschwächte Licht, das dem Abtastlicht des Weißpunktes der betreffenden Vorlage entspricht, am Ausgang des Verstärkers 15 in einen Bildsignalwert $U_B$ umgewandelt wird, der dem Bezugssignalwert oder Weißpegel $U_{BSoll}$ entspricht.

In einem Register 47 der Hochspannungsregelungs-Stufe 29 ist noch ein digitaler Spannungswert gespeichert, der von dem vorangegangenen Weiß-Abgleich stammt. Dieser digitale Spannungswert wird über eine Leitung 48 an einen D/A-Wandler 49 gegeben und dort in einen analogen Hochspannungs-Steuersignalwert $U_{SH}$ auf der Leitung 19 umgewandelt und dem Hochspannungs-Generator 18 zugeführt. Mit dem Hochspannungs-Steuersignalwert $U_{SH}$ wird die Hochspannung $U_H$ zunächst auf den Wert des vorangegangenen Weiß-Abgleichs eingestellt, wodurch am Ausgang des Verstärkers 15 ein Bildsignalwert $U_B$ entsteht, der zunächst nur ungefähr dem Weißpegel $U_{BSoll}$ entspricht.

Der Bildsignalwert $U_B$ gelangt über eine Leitung 50 als Bildsignal-Istwert $U_{BIst}$ für die Hochspannungs-Einstellung an einen Eingang einer Subtrahier-Stufe 51 in der Hochspannungsregelungs-Stufe 29.

Dem zweiten Eingang der Subtrahier-Stufe 51 wird der dem Weißpegel entsprechende Bildsignal-Sollwert $U_{BSoll}$ über eine Leitung 52 zugeführt. In der Subtrahier-Stufe 51 wird laufend die Differenz zwischen Bildsignal-Sollwert und Bildsignal-Istwert gebildet und diese einer Vergleichs-Stufe 53 zugeführt. In der Vergleichs-Stufe 53 wird die Differenz auf größer oder kleiner Null untersucht und ein entsprechendes erstes Steuersignal auf einer Leitung 54 erzeugt. Gleichzeitig gibt die Vergleichs-Stufe 53 ein zweites Steuersignal auf eine Leitung 55 ab, wenn die Differenz Null ist. Das erste Steuersignal auf der Leitung 54 geht an den Vorwärts/Rückwärts-Steuereingang 56 eines Vorwärts/Rückwärts-Zählers 57, dessen Takteingang 58 mit einem Taktgenerator 59 verbunden ist. Der Taktgenerator 59 erzeugt Zähltakte, die in Abhängigkeit des ersten Steuersignals auf der Leitung 54 bzw. in Abhängigkeit davon, ob die Differenz größer oder kleiner Null ist, den Zählerstand des Vorwärts/Rückwärts-Zählers 57 erhöhen oder erniedrigen. Der momentane Zählerstand des Vorwärts/Rückwärts-Zählers 57 wird laufend in das Register 47 übertragen und durch den D/A-Wandler 49 in das analoge Hochspannungs-Steuersignal $U_{SH}$ umgewandelt, mit dem die Hochspannung $U_H$ bzw. die Empfindlichkeit des Fotomultipliers 13 so verändert wird, daß der auf der Leitung 50 gemessene Bildsignal-Istwert $U_{BIst}$ dem Weißpegel $U_{BSoll}$ entspricht. Dann ist die in der Subtrahier-Stufe 51 festgestellte Differenz gleich Null, das zweite Steuersignal auf der Leitung 55 schaltet den Taktgenerator 59 ab, und der dabei erreichte Zählerstand im Vorwärts/Rückwärts-Zähler 57 wird für die nach dem Weiß-Abgleich erfolgende Abtastung der zu reproduzierenden Vorlage fixiert. Das Ende des Weiß-Abgleichs wird vom zweiten Steuersignal auf der Leitung 55 an den Zeitgeber 35 signalisiert, wodurch der Schalter der Schalt-Stufe 16 in die gestrichelte Position für die Vorlagen-Abtastung und die Schalter der Schalt-Stufen 30 und 31 in die Position $A_1$ zurückgestellt werden. Dadurch gelangt der Spannungswert $U_M$ an den Stellmotor 23, welcher die Irisblende 22 wieder voll öffnet, so daß sie für die Vorlagen-Abtastung unwirksam ist.

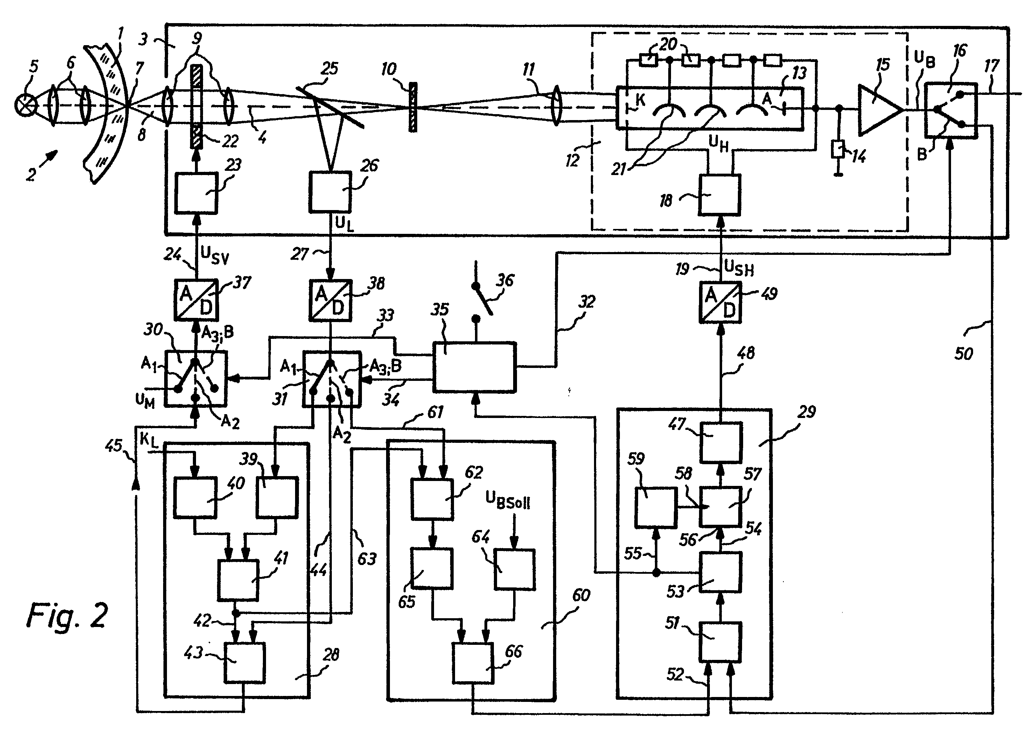

Fig. 2 zeigt eine Weiterbildung der in Fig. 1 dargestellten Einrichtung zum automatischen Weiß-Abgleich eines Schwarz/Weiß-Abtastorgans, die sich durch eine zusätzliche Korrekturwert-Stufe 60 unterscheidet.

Wegen mechanischer und/oder elektromagnetischer Unzulänglichkeiten der Irisblende und der Verstell-Vorrichtung kann die exakte Einstellung der Blendenöffnung oft zu lange dauern, oder die exakte Einstellung wird gar nicht erreicht. Das kann eine ungenaue Lichtabschwächung und damit einen ungenauen Weiß-Abgleich zur Folge haben, wodurch die Reproduktionsqualität leidet.

Zur Erhöhung der Präzision und der Reproduzierbarkeit des Weiß-Abgleiches wird der in Fig. 1 beschriebene Abgleichvorgang dahingehend abgeändert, daß die Einstellung der Irisblende 22 während des Schrittes $A_2$ nach einem vorgegebenen Zeitintervall abgebrochen wird, wodurch das Licht nicht exakt auf den errechneten Lichtleistungs-Sollwert $U_{LSoll}$ abgeschwächt wird und daß die ansich dadurch bedingte Ungenauigkeit des Weiß-Abgleichs bei der nachfolgenden Hochspannungs-Einstellung des Fotomultipliers 13 in der Phase B korrigiert wird.

Dazu gibt der Zeitgeber 35 nach dem vorgegebenen Zeitintervall, das beim Start der Blenden-Einstellung im Schritt $A_2$ beginnt, Steuersignale über die Leitung 33 an die Schalt-Stufe 30 und über die Leitung 34 an die Schalt-Stufe 31, welche den Schritt $A_2$ beenden und die Schalter in die Position $A_3$ umschalten.

Der Schalter der Schalt-Stufe 30 unterbricht die Verbindung zwischen Stellmotor 23 und Lichtregelungs-Stufe 28, und die Einstellung der Irisblende 22 wird abgebrochen. In einem sich an den Schritt $A_2$ anschließenden Schritt $A_3$ wird das Licht, das durch die bei Abbruch der Blenden-Einstellung erreichte Blendenöffnung der Irisblende 22 fällt, mittels der Lichtmeß-Stufe 26 als Lichtleistung $U'_L$ gemessen.

In der Korrekturwert-Stufe 60 wird durch Quotientenbildung aus der gemessenen Lichtleistung $U'_L$ für die ungenaue Blendeneinstellung und dem errechneten Lichtleistungs-Sollwert $U_{LSoll}$ für die exakte Blendeneinstellung gemäß Gleichung (2) ein Korrekturfaktor $K_U$ gebildet, welcher ein Maß für die ungenaue Lichtabschwächung aufgrund der abgebrochenen Blenden-Einstellung ist.

$$K_U = \frac{U'_L}{U_{LSoll}} \qquad (2)$$

Dazu wird die gemessene Lichtleistung $U'_L$ über die Leitung 27, dem A/D-Wandler 38 und über die Schalt-Stufe 31 und eine Leitung 61 dem ersten Eingang einer Dividier-Stufe 62 in der Korrekturwert-Stufe 60 zugeführt. An den zweiten Eingang der Dividier-Stufe 62 gelangt über eine Leitung 63 der in der Lichtregelungs-Stufe 28 berechnete Lichtleistungs-Sollwert $U_{LSoll}$. Zur Korrektur der Ungenauigkeit des Weiß-Abgleichs, die aufgrund der ungenauen Lichtabschwächung durch die Irisblende 22 entstehen würde, wird der für die exakte Lichtabschwächung geltende Bildsignal-Sollwert $U_{BSoll}$ entsprechend dem ermittelten Korrekturfaktor $K_U$ gemäß Gleichung (3) korrigiert und die Hochspannungs-Einstellung für den Fotomultiplier 13 mit dem korrigierten Bildsignal-Sollwert $U'_{BSoll}$ vorgenommen.

$$U'_{BSoll} = K_U \cdot U_{BSoll} \quad (3)$$

Der korrigierte Bildsignal-Sollwert $U'_{BSoll}$ wird durch Multiplikation des vorgegebenen Bildsignal-Sollwertes $U_{BSoll}$ für den Weißpegel, der in einem Register 64 abgelegt ist, mit dem in einem Register 65 zwischengespeicherten Korrekturfaktor $K_U$ in einer Multiplizier-Stufe 66 gewonnen und über die Leitung 52 der Hochspannungsregelungs-Stufe 29 zugeführt. Damit ist Schritt $A_2$ abgeschlossen, und die Einstellung der Hochspannung für den Fotomultiplier 13 mit dem korrigierten Bildsignal-Sollwert $U'_{BSoll}$ in der Phase B beginnt wie bereits ausführlich in Fig. 1 beschrieben.

In den Fig. 1 und 2 wird das Licht mit Hilfe einer Meß-Vorrichtung bestehend aus Spiegel 25 und Lichtmeß-Stufe 26 gemessen. Da die Meß-Vorrichtung normalerweise noch andere Funktionen in einem Scanner erfüllt, auf die aber nicht näher eingegangen werden sollen, stellt die Meß-Vorrichtung in bezug auf die Einrichtung zum Weiß-Abgleich keinen zusätzlichen apparativen Aufwand dar. Falls die Meß-Vorrichtung aber keine anderen Funktionen übernimmt, läßt sich die Meß-Vorrichtung einsparen, indem die erforderlichen Lichtmessungen mit Hilfe des Fotomultipliers 13 durchgeführt werden.

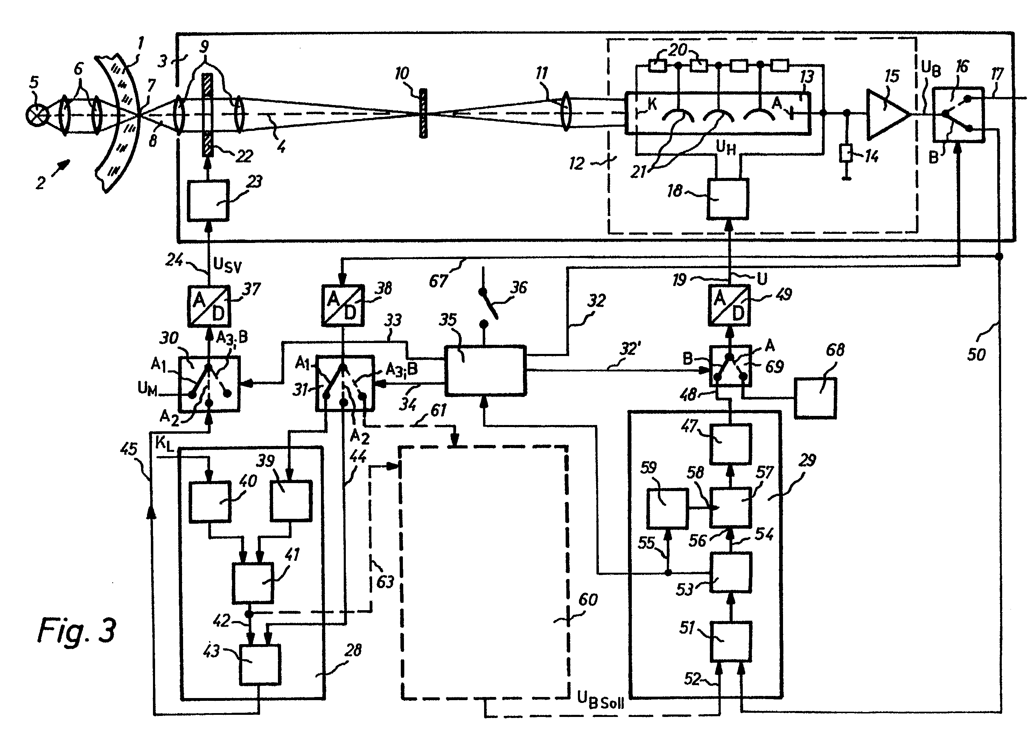

Fig. 3 zeigt hierfür ein entsprechendes Ausführungsbeispiel, das sich gegenüber den Ausführungsbeispielen nach den Fig. 1 und 2 schaltungstechnisch wie folgt unterscheidet.

Der Spiegel 25 und die Lichtmeß-Stufe 26 entfallen. Statt dessen werden die gemessenen Lichtleistungen $U_L$ vom Ausgang des Verstärkers 15 über eine Leitung 67 an den A/D-Wandler 38 geführt. Zur Lichtleistungs-Messung mit dem Fotomultiplier 13 wird dessen Hochspannung $U_H$ auf einen geeigneten Wert eingestellt. Dazu ist in einem weiteren Register 68 ein digitaler Wert abgespeichert, der während der Phase A, in der die Lichtabschwächung durchgeführt wird, über eine weitere Schalt-Stufe 69 an den D/A-Wandler 49 gegeben und dort in einen analogen Hochspannungs-Steuersignalwert $U_{SH}$ umgewandelt wird. Der Schalter der Schalt-Stufe 69 befindet sich dabei in Position A. Die Lichtabschwächung in Phase A wird wie bereits in Fig. 1 beschrieben durchgeführt. Die Phase B, in der die Hochspannung des Fotomultipliers 13 eingestellt wird, wird durch Umschalten der Schalt-Stufe 69 in die Position B eingeleitet. Die Hochspannungs-Einstellung läuft wie in Fig. 1 beschrieben ab.

In Fig. 2 wurde zur Lichtleistungs-Messung die aus Spiegel 25 und Lichtmeß-Stufe 26 bestehende Meßvorrichtung und in Fig. 3 der Fotomultiplier 13 verwendet.

In einem weiteren Ausführungsbeispiel für eine Einrichtung zum Weiß-Abgleich kann zur Lichtleistungs-Messung sowohl die Meßvorrichtung nach Fig. 2 als auch der Fotomultiplier 13 nach Fig. 3 benutzt werden, was besonders dann von Vorteil ist, wenn die Lichtleistungs-Messung mit dem Fotomultiplier 13 genauer ist als mit der Meßvorrichtung. In diesem Fall wird zur Berechnung des Lichtleistungs-Sollwertes $U_{LSoll}$ in der Lichtregelungs-Stufe 28 die von der Meßvorrichtung ermittelte Lichtleistung $U_{LO}$ herangezogen, während zur Berechnung des Korrekturfaktors $K_U$ in der Korrekturwert-Stufe 60 der mit Hilfe des Fotomultipliers 13 gemessene Lichtleistungen verwendet werden.

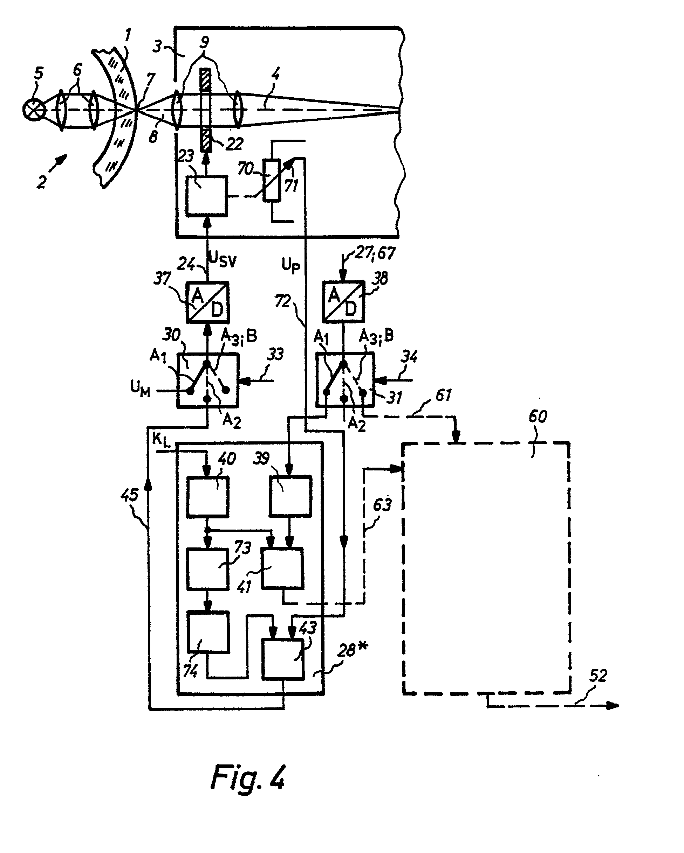

Fig. 4 zeigt eine Variante der in den Fig. 1, 2 und 3 beschriebenen Einstellung der Irisblende 22 durch den Stellmotor 23.

Die jeweilige Stellung der Irisblende 22 wird nicht, wie in den Fig. 1, 2 und 3 beschrieben, indirekt über die Messung der Lichtabschwächung, sondern direkt mit Hilfe eines Stellpotentiometers 70 festgestellt. Der Abgriff 71 des Stellpotentiometers 70 wird durch den Stellmotor 23 für die Irisblende 22 verschoben, so daß die abgegriffene Spannung $U_P$ ein Maß für die jeweilige Blendenöffnung ist und anstelle des mit der Lichtmeß-Stufe 26 gemessenen Werts als Istwert auf der Leitung 72 für die Einstellung der Irisblende 22 verwendet werden kann. Die geänderte Lichtregelungs-Stufe 28* weist die aus der Lichtregelungs-Stufe 28 bekannten Elemente wie Register 39 und 40, Multiplizier-Stufe 41 und Subtrahier-Stufe 43 und zusätzlich eine Rechen-Stufe 73 und einen Tabellen-Speicher 74 auf. Der in dem Register 40 abgelegte Licht-Abschwächungsfaktor $K_L$ wird in der Rechen-Stufe 73 zu einer Speicheradresse für den Tabellen-Speicher 74 umgerechnet, unter der der entsprechende Spannungs-Sollwert $U_{PSoll}$ abgelegt ist, der zur Einstellung einer bestimmten Blendenöffnung der Irisblende 22 am Stellpotentiometer 70 erreicht werden muß. Der aus dem Tabellen-Speicher 74 ausgelesene Spannungs-Sollwert $U_{PSoll}$ und der über die Leitung 72 herangeführte Spannungs-Istwert $U_{PIst}$ am Stellpotentiometer 70 gelangen auf die Subtrahier-Stufe 43, in der, wie bereits in Fig. 1 beschrieben, die Differenz gebildet und als Verstell-Steuersignal $U_{SV}$ über die Leitung 45, die Schalt-Stufe 30 und den D/A-Wandler 37 an den Stellmotor 23 gegeben wird.

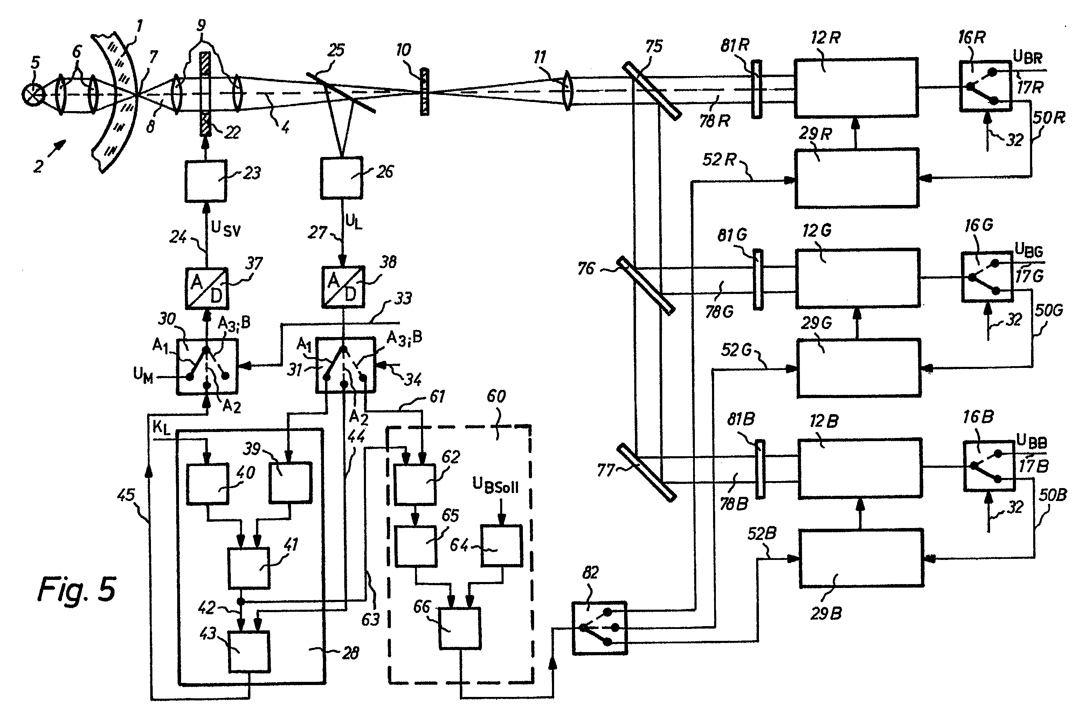

Fig. 5 zeigt ein Ausführungsbeispiel für die Einrichtung zum automatischen Weiß-Abgleich eines Farb-Abtastorgans bei einem Farb-Scanner in einem prinzipiellen Blockschaltbild. Im Gegensatz zu dem in den Fig. 1, 2 und 3 dargestellten Abtastorgan für Schwarz/Weiß-Abtastung weist das Farb-Abtastorgan einen Farbteiler auf, der das von der farbigen Vorlage kommende Abtastlicht in die Farbanteile zerlegt und getrennten Farbkanälen zuführt.

Der Farbteiler besteht aus farbselektiven Spiegeln 75 und 76 und einem Spiegel 77, mit denen das farbige Abtastlicht in drei Teilbündel 78R, 78G und 78B für die drei Farbkanäle zerlegt wird. Den Farbkanälen sind Farbfilter 81R, 81G und 81B zur weiteren Farbtrennung des farbigen Abtastlichts in die Farbanteile "Rot", "Grün" und "Blau" und Licht/Spannungs-Wandlereinrichtungen 12R, 12G und 12B zugeordnet zur Umwandlung der Farbanteile des Abtastlichts in die Farbsignale $U_{BR}$, $U_{BG}$ und $U_{BB}$, die über die Schalt-Stufen 16R, 16G und 16B und die Leitungen 17R, 17G und 17B an eine nicht dargestellte Farbsignal-Verarbeitungsschaltung des Farb-Scanners gegeben werden. Den Licht/Spannungs-Wandlereinrichtungen 12R, 12G und 12B, die wiederum Fotomultiplier aufweisen, sind Hochspannungsregelungs-Stufen 29R, 29G und 29B zur Einstellung der Empfindlichkeit bzw. des Verstärkungsgrades der Fotomultiplier zugeordnet.

Den Hochspannungsregelungs-Stufen 29R, 29G und 29B werden die Farbsignal-Istwerte $U_{BR}$, $U_{BG}$ und $U_{BB}$ über die Leitungen 50R, 50G und 50B zugeführt.

Zur Lichtabschwächung vor der Farbteilung ist wie im Ausführungsbeispiel der Fig. 1 die Irisblende 22, die Meßvorrichtung besteht aus Spiegel 25 und Lichtmeß-Stufe 26 sowie die Lichtregelungs-Stufe 28 vorgesehen und die Lichtabschwächung läuft, wie in Fig. 1 beschrieben, ab. In das Register 40 der Lichtregelungs-Stufe 28 können für die einzelnen Farbkanäle unterschiedliche Licht-Abschwächungsfaktoren $K_L$ geladen werden, falls für die einzelnen Farbkanäle unterschiedliche Lichtabschwächungen erforderlich sind. Selbstverständlich kann auch wie in Fig. 3 die Meßvorrichtung im Strahlengang entfallen und die Lichtleistungs-Messung mit Hilfe einer der drei vorhandenen Licht/Spannungs-Wandlereinrichtungen durchgeführt werden.

Falls beim Weiß-Abgleich des Farb-Abtastorgans eine Farbstichkompensation erfolgen soll, werden über einen Umschalter 82 und die Leitungen 52R, 52G und 52B an alle drei Hochspannungsregelungs-Stufen 29R, 29G und 29B nacheinander derselbe Farbsignal-Sollwert gegeben, so daß die eingestellten Farbsignalwerte in allen Farbkanälen gleich sind und dem Weißpegel entsprechen. Wird dagegen eine farbgetreue Wiedergabe gewünscht, werden entsprechend unterschiedliche Farbsignal-Sollwerte an die Hochspannungsregelungs-Stufen 29R, 29G und 29B gegeben, so daß die eingestellten Farbsignalwerte unterschiedlich sind, wobei einer der Farbsignalwerte dem Weißpegel entspricht. Entsprechend dem in Fig. 2 dargestellten Ausführungsbeispiel für ein Schwarz/Weiß-Abtastorgan kann auch bei dem Farb-Abtastorgan eine Korrekturwert-Stufe 60 vorgesehen werden, die in Fig. 5 nur gestrichelt angedeutet ist. In dem Register 64 der Korrekturwert-Stufe 60 sind wiederum nur ein Farbsignal-Sollwert für die Farbstichkompensation oder aber für die farbgetreue Wiedergabe unterschiedlicher Farbsignal-Sollwerte für die einzelnen Farbkanäle abgelegt.

Aus den im Register 64 gespeicherten Farbsignal-Sollwerten werden wie in Fig. 2 erläutert die korrigierten Farbsignal-Sollwerte errechnet und über den Umschalter 82 auf die einzelnen Farbkanäle geschaltet.

Bei allen Ausführungsbeispielen liegt es im Rahmen der Erfindung bei der Einstellung der Bildsignal- bzw. Farbsignal-Pegel anstelle der Empfindlichkeit des Fotomultipliers über die Hochspannung auch den Verstärkungsgrad eines anderen optisch-elektrischen Wandlers und/oder eines nachgeschalteten Verstärkers zu regeln.

**Patentansprüche**

1. Verfahren zum Weiß-Abgleich der Licht/Spannungs-Wandlereinrichtung eines Abtastorgans zur bildpunkt- und zeilenweisen Abtastung einer von einer Abtast-Lichtquelle beleuchteten Vorlage und zur Umwandlung des mit den Dichtewerten der abgetasteten Vorlage modulierten Abtastlichts in ein elektrisches Bildsignal ($U_B$), bei dem vor der Vorlagen-Abtastung

a) Licht mit einer Lichtleistung erzeugt wird, die der Lichtleistung des von der hellsten Stelle der Vorlage, dem Weißpunkt, ausgehenden Abtastlichts entspricht und das erzeugte Licht in der Licht/Spannungs-Wandlereinrichtung (12) in einen Bildsignalwert ($U_B$) umgewandelt wird,

b) der Bildsignalwert ($U_B$) des Weißpunktes gemessen und mit einem Bezugssignalwert ($U_{Bsoll}$) verglichen wird den der Bildsignalwert ($U_B$) des Weißpunktes erreichen soll, und

c) bei dem durch Änderung der Empfindlichkeit bzw. der Verstärkung der Licht/Spannungs-Wandlereinrichtung (12) der Bildsignalwert ($U_B$) des Weißpunktes auf den Bezugssignalwert ($U_{Bsoll}$) eingestellt wird, dadurch gekennzeichnet, daß

d) der Transmissionsgrad des Weißpunktes einer Durchsichts-Vorlage oder der Reflexionsgrad des Weißpunktes eine Aufsichts-Vorlage bestimmt und als Licht-Abschwächungsfaktor ($K_L$) festgehalten wird,

e) die Lichtleistung ($U_{LO}$) desjenigen Lichtanteils des von der Abtast-Lichtquelle (5) erzeugten Lichts gemessen wird, der der Licht/Spannungs-Wandlereinrichtung (12) ohne Abtastung der Vorlage zugeführt wird, und aus der gemessenen Lichtleistung ($U_{LO}$) und dem Licht-Abschwächungsfaktor ($K_L$) ein Lichtleistungs-Sollwert ($U_{Lsoll}$) für das Abtastlicht errechnet wird, der der Lichtleistung ($U_L$) des von dem Weißpunkt der Vorlage ausgehenden Abtastlichts entspricht, und

f) der gemessene Lichtanteil durch Abblendung abgeschwächt wird und der durch den abgeschwächten Lichtanteil gewonnene Bildsignalwert ($U_B$) auf den Bezugssignalwert ($U_{Bsoll}$) eingestellt wird.

2. Verfahren nach Anspruch 1, dadurch gekennzeichnet, daß der gemessene Lichtanteil auf den Lichtleistungs-Sollwert ($U_{Lsoll}$) abgeschwächt wird.

3. Verfahren nach Anspruch 1, dadurch gekennzeichnet, daß

a) die Abschwächung des gemessenen Lichtanteiles vor Erreichen des Lichtleistungs-Sollwertes ($U_{LSoll}$) abgebrochen wird,

b) aus der bei Abbruch vorhandenen Lichtleistung ($U_L$) des abgeschwächten Lichtanteils und dem berechneten Lichtleistungs-Sollwert ($U_{LSoll}$) ein Korrekturfaktor ($K_U$) ermittelt wird, und

c) der Bezugssignalwert ($UB_{Soll}$) für das Bildsignal ($U_B$) entsprechend dem Korrekturfaktor ($K_U$) korrigiert und dann zur Kompensation der durch den Abbruch der Lichtabschwächung bedingten Ungenauigkeit der mit dem abgeschwächten Lichtanteil erzeugte Bildsignalwert ($U_B$) auf den korrigierten Bezugs-Signalwert ($U'B_{Soll}$) eingestellt wird.

4. Verfahren nach einem der Ansprüche 1–3, dadurch gekennzeichnet, daß

a) die Abschwächung des gemessenen Lichtanteils mit Hilfe einer im Strahlengang des Abtastorgans (3) angeordneten Irisblende (22) durchgeführt wird, deren Blendenöffnung durch ein Steuersignal ($U_{SV}$) verändert wird,

b) die Lichtleistung ($U_{LO}$) des gemessenen Lichtanteils durch die voll geöffnete Irisblende (22) gemessen wird,

c) bei der Abschwächung des gemessenen Lichtanteils durch die Irisblende (22) die Lichtleistung des durch die jeweilige Blendenöffnung fallenden Lichtanteils als Lichtleistungs-Istwert ($U_{LIst}$) gemessen, laufend die Differenz zwischen Lichtleistungs-Sollwert ($U_{LSoll}$) und Lichtleistungs-Istwert ($U_{LIst}$) gebildet und als Steuersignal ($U_{SV}$) für die Irisblende (22) verwendet wird, und

d) die Irisblende (22) nach Durchführung des Weiß-Abgleichs wieder voll geöffnet wird.

5. Verfahren nach einem der Ansprüche 1–4, dadurch gekennzeichnet, daß die Messung der Lichtleistung des Lichtanteils mit Hilfe einer im Strahlengang des Abtastorgans (3) angeordneten optisch-elektrischen Meßeinrichtung (25; 26) durchgeführt wird.

6. Verfahren nach einem der Ansprüche 1–4, dadurch gekennzeichnet, daß die Messung der Lichtleistung des Lichtanteils mit Hilfe der Licht/Spannungs-Wandlereinrichtung (12) durchgeführt wird.

7. Verfahren nach einem der Ansprüche 1–6, dadurch gekennzeichnet, daß

a) die Empfindlichkeit bzw. die Verstärkung der Licht/Spannungs-Wandlereinrichtung (12) durch ein Steuersignal ($U_{SH}$) verändert wird, und

b) Bildsignal-Istwerte ($UB_{Ist}$) gemessen werden, laufend die Differenz aus den Bildsignal-Istwerten ($UB_{Ist}$) und dem vorgegebenen oder korrigierten Bezugssignalwert ($UB_{Soll}$; $U'B_{Soll}$) gebildet und aus der Differenz das Steuersignal ($U_{SH}$) für die Licht/Spannungs-Wandlereinrichtung (12) abgeleitet wird

8. Verfahren nach Anspruch 7, dadurch gekennzeichnet, daß

a) das jeweilige Vorzeichen der Differenz festgestellt wird,

b) das Steuersignal ($U_{SH}$) für die Licht/Spannungs-Wandlereinrichtung (12) in Abhängigkeit von den festgestellten Vorzeichen vergrößert oder verkleinert wird, und

c) der bei der Differenz Null erreichte Steuersignalwert für die spätere Vorlagen-Abtastung festgehalten wird.

9. Verfahren nach Anspruch 7 und 8, dadurch gekennzeichnet, daß

a) in Abhängigkeit von dem festgestellten Vorzeichen der Differenz Takte in einen Zähler (57) eingezählt oder aus dem Zähler (57) ausgezählt werden,

b) der jeweilige Zählerstand in das Steuersignal ($U_{SH}$) umgewandelt wird, und

c) der Zählerstand bei der Differenz Null fixiert wird.

10. Verfahren nach einem der Ansprüche 4–9, dadurch gekennzeichnet, daß

a) das Abtastorgan (3) ein Abtast-Objektiv (9) und eine Abtast-Blende (10) aufweist, und

b) die Irisblende (22) in der Nähe des Abtast-Objektivs (9), vorzugsweise im Abtast-Objektiv (9), angeordnet ist.

11. Verfahren nach einem der Ansprüche 5–10, dadurch gekennzeichnet, daß die optisch-elektrische Meßeinrichtung (25; 26) zwischen Irisblende (22) und Abtast-Blende (10) angeordnet ist.

12. Verfahren nach einem der Ansprüche 1–11, dadurch gekennzeichnet, daß als Licht/Spannungs-Wandlereinrichtung (12) ein Photomultiplier (13) verwendet wird.

13. Verfahren nach einem der Ansprüche 1–3 oder 5–12, dadurch gekennzeichnet, daß

a) die Abschwächung des gemessenen Lichtteils mit Hilfe einer im Strahlengang des Abtastorgans (3) angeordneten Irisblende (22) durchgeführt wird, deren Blendenöffnung durch ein Steuersignal ($U_{SV}$) verändert wird,

b) die Lichtleistung ($U_{LO}$) des Lichtanteils durch die voll geöffnete Irisblende (22) gemessen wird,

c) bei der Abschwächung des gemessenen Lichtanteils durch die Irisblende (22) gleichzeitig mit der Änderung der Blendenöffnung ein Potentiometer (70) verstellt wird, dessen abgegriffener Spannungswert ein Maß für die jeweilige Ist-Blendenöffnung ist,

d) der Licht-Abschwächungsfaktor ($K_L$) in eine Soll-Blendenöffnung umgerechnet wird, bei der gemessene Lichtanteil entsprechend dem Licht-Abschwächungsfaktor ($K_L$) abgeschwächt wird, und

e) die Differenz aus Soll-Blendenöffnung und Ist-Blendenöffnung gebildet und als Steuersignal ($U_{SV}$) für die Irisblende (22) verwendet wird.

14. Einrichtung zum Weiß-Abgleich der Licht/Spannungs-Wandlereinrichtung eines Abtastorgans zur bildpunkt- und zeilenweisen Abtastung von Schwarz/Weiß-Vorlagen, bestehend aus

a) einer Abtast-Lichtquelle (5) zur Beleuchtung der Schwarz-Weiß-Vorlagen,

b) einem Abtastorgan (3), welches ein Abtast-Objektiv (9), eine Abtast-Blende (10) und eine Licht/Spannungs-Wandlereinrichtung (12) zur

Umwandlung des Abtastlichts in ein Bildsignal (U_B) enthält, und aus

c) einer Schaltungsanordnung (29) zur Einstellung der Empfindlichkeit bzw. der Verstärkung der Licht/Spannungs-Wandlereinrichtung (12), deren Steuereingang mit dem Ausgang der Schaltungsanordnung (29) und deren Ausgang mit dem ersten Eingang der Schaltungsanordnung (29) verbunden sind, wobei der zweite Eingang der Schaltungsanordnung (29) mit einem Bezugssignalwert (U_BSoll) für das Bildsignal (U_B) beaufschlagbar ist, gekennzeichnet durch

d) einen durch ein Steuersignal (U_SV) steuerbaren Lichtabschwächer (22; 23; 37), welcher im Strahlengang des Abtastorgans (3) vor der Abtast-Blende (10) angeordnet ist, zur Abschwächung derjenigen Lichtanteils des von der Abtast-Lichtquelle (5) erzeugten Lichts, der der Licht/Spannungs-Wandlereinrichtung (12) ohne Abtastung der Vorlage zugeführt wird.

e) eine Licht-Meßvorrichtung (12 bzw. 25; 26; 38) im Stahlengang des Abtastorgans (3) zur Messung der Lichtleistung (U_LO; U_LIst) des jeweils durch den Lichtabschwächer (22; 23; 37) hindurchtretenden Lichtanteils, und

f) eine Lichtregelungs-Schaltung (28; 30; 31) zur Erzeugung des Steuer-Signals (U_SV), deren Ausgang mit dem Steuereingang des Lichtabschwächers (22; 23; 37) und deren erster Eingang mit der Licht-Meßvorrichtung (12 bzw. 25; 26; 38) verbunden ist, wobei deren zweiter Eingang mit dem vorgebbaren Licht-Abschwächungsfaktor (K_L) beaufschlagbar ist.

15. Einrichtung nach Anspruch 14, dadurch gekennzeichnet, daß die Licht-Meßvorrichtung (25; 26; 38) zwischen dem Lichtabschwächer (22; 23; 37) und der Licht/Spannungs-Wandlereinrichtung (12) angeordnet ist.

16. Einrichtung nach Anspruch 14, dadurch gekennzeichnet, daß als Licht-Meßvorrichtung die Licht/Spannungs-Wandlereinrichtung (12) verwendet wird.

17. Einrichtung nach einem der Ansprüche 14–16, gekennzeichnet durch eine Korrekturwert-Stufe (60), deren Eingänge an die Lichtregelungs-Schaltung (28; 30; 31) und deren Ausgang an den zweiten Eingang der Schaltungsanordnung (29) angeschlossen sind, zur Korrektur des Bezugssignalwertes (U_BSOLL) für das Bildsignal (U_B).

18. Einrichtung nach einem der Ansprüche 14–17, dadurch gekennzeichnet, daß der Lichtabschwächer eine verstellbare Irisblende (22) und einen Stellmotor (23) für die Irisblende (22) aufweist.

19. Einrichtung nach Anspruch 18, dadurch gekennzeichnet, daß der Lichtabschwächer zusätzlich ein durch den Stellmotor (23) verstellbares Potentiometer (70) zur Erzeugung eines die jeweilige Blendenöffnung der Irisblende (22) repräsentierenden Signals aufweist.

20. Verfahren zum Weiß-Abgleich der Licht/Spannungs-Wandlereinrichtungen eines Farb-Abtastorgans zur bildpunkt- und zeilenweisen Abtastung einer von einer Abtast-Lichtquelle beleuchteten Farbvorlage, zur Aufspaltung des mit den Dichtewerten der Farbvorlage modulierten Abtastlichts in Farbanteile für jeden Farbkanal und zur Umwandlung der Farbanteile der Farbkanäle in elektrische Farbsignale, bei dem vor der Vorlagen-Abtastung

a) Licht mit einer Lichtleistung erzeugt wird, die der Lichtleistung des von der hellsten Stelle der Farbvorlage, dem Weißpunkt, ausgehenden Abtastlichts entspricht und das erzeugte Licht in den Licht/Spannungs-Wandlereinrichtungen (12R; 12G; 12B) in Farbsignalwerte (U_BR; U_BG; U_BB) umgewandelt wird,

b) die Farbsignalwerte (U_BR; U_BG; U_BB) des Weißpunktes gemessen und mit den einzelnen Farbkanälen zugeordneten Bezugssignalwerten (U_BSOLL) verglichen werden, welche die Farbsignalwerte (U_BR; U_BG; U_BB) des Weißpunktes erreichen sollen, und

c) bei dem durch Änderung der Empfindlichkeit bzw. der Verstärkung der Licht/Spannungs-Wandlereinrichtungen (12R; 12G; 12B) die Farbsignalwerte (U_BR; U_BG; U_BB) des Weißpunktes auf die zugehörigen Bezugssignalwerte (U_BSoll) eingestellt werden, dadurch gekennzeichnet, daß

d) der Transmissionsgrad des Weißpunktes einer Durchsichts-Farbvorlage oder der Reflexionsgrad des Weißpunktes einer Aufsichts-Farbvorlage bestimmt und als Licht-Abschwächungsfaktor (K_L) festgehalten wird,

e) die Lichtleistung (U_LO) desjenigen Lichtanteils des von der Abtast-Lichtquelle (5) erzeugten Lichts gemessen wird, der den Licht/Spannungs-Wandlereinrichtungen (12R; 12G; 12B) ohne Abtastung der Farbvorlage zugeführt wird und aus der gemessenen Lichtleistung (U_LO) und dem Licht-Abschwächungsfaktor (K_L) ein Lichtleistungs-Sollwert (U_LSoll) errechnet wird, welcher der Lichtleistung des vom Weißpunkt der Farbvorlage ausgehenden Abtastlichts entspricht, und

f) der gemessene Lichtanteil durch Abblendung abgeschwächt wird und dann die mit dem abgeschwächten Lichtanteil gewonnenen Farbsignalwerte (U_BR; U_BG; U_BB) auf die zugehörigen Bezugssignalwerte (U_BSoll) eingestellt werden.

21. Verfahren nach Anspruch 20, dadurch gekennzeichnet, daß der gemessene Lichtanteil auf den Lichtleistungs-Sollwert (U_LSoll) abgeschwächt wird.

22. Verfahren nach Anspruch 20, dadurch gekennzeichnet, daß

a) die Abschwächung des gemessenen Lichtanteils vor Erreichen des Lichtleistungs-Sollwertes (U_LSoll) abgebrochen wird,

b) aus der bei Abbruch vorhandenen Lichtleistung (U_L) des abgeschwächten Lichtanteils und dem berechneten Lichtleistungs-Sollwert (U_LSoll) ein Korrekturfaktor (K_u) ermittelt wird, und

c) die Bezugssignalwerte (U_BSoll) für die Farbsignale (U_BR; U_BG: U_BB) entsprechend dem Korrekturfaktor (K_u) korrigiert und dann zur Kompensation der durch den Abbruch der Lichtabschwächung bedingten Ungenauigkeit die mit dem abgeschwächten Lichtanteil erzeugten Farbsignalwerte ($U_{BR}$; $U_{BG}$; $U_{BB}$) auf die korrigierten Bezugssignalwerte ($U'_{BSoll}$) eingestellt werden.

23. Verfahren nach einem der Ansprüche 20–22, dadurch gekennzeichnet, daß

a) die Abschwächung des gemessenen Lichtanteils mit Hilfe einer im Strahlengang des Farb-Abtastorgans angeordneten Irisblende (22) durchgeführt wird, deren Blendenöffnung durch ein Steuersignal ($U_{SV}$) verändert wird,

b) die Lichtleistung ($U_{LO}$) des Lichtanteils durch die voll geöffnete Irisblende (22) gemessen wird,

c) bei der Abschwächung des gemessenen Lichtanteils durch die Irisblende (22) die Lichtleistung des durch die jeweilige Blendenöffnung fallenden Lichtanteils als Lichtleistungs-Istwert ($U_{LIst}$) gemessen, laufend die Differenz aus Lichtleistungs-Sollwert ($U_{LSoll}$) und Lichtleistung-Istwert ($U_{LIst}$) gebildet und als Steuersignal ($U_{SV}$) für die Irisblende (22) verwendet wird, und

d) die Irisblende (22) nach Durchführung des Weiß-Abgleichs wieder voll geöffnet wird

24. Verfahren nach einem der Ansprüche 20–23, dadurch gekennzeichnet, daß die Messung der Lichtleistung des Lichtanteils mit Hilfe einer im Strahlengang des Farb-Abtastorgans angeordneten optisch-elektrischen Meßeinrichtung (25; 26) durchgeführt wird.

25. Verfahren nach einem der Ansprüche 20–23, dadurch gekennzeichnet, daß die Messung der Lichtleistung des Lichtanteils mit Hilfe einer der Licht/Spannungs-Wandlereinrichtungen (12R; 12G; 12B) durchgeführt wird.

26. Verfahren nach einem der Ansprüche 20–25, dadurch gekennzeichnet, daß in jedem Farbkanal

a) die Empfindlichkeit bzw. der Verstärkungsgrad der Licht/Spannungs-Wandlereinrichtung (12R; 12G; 12B) des betreffenden Farbkanals durch ein Steuersignal ($U_{SH}$) verändert wird, und

b) Farbsignal-Istwerte gemessen werden und laufend die Differenz aus den Farbsignal-Istwerten und dem vorgegebenen oder korrigierten Bezugssignalwert ($U_{BSoll}$; $U'_{BSoll}$) gebildet und aus der Differenz das Steuersignal ($U_{SH}$) abgeleitet wird.

27. Verfahren nach Anspruch 26, dadurch gekennzeichnet, daß in jedem Farbkanal

a) das jeweilige Vorzeichen der Differenz festgestellt wird,

b) das Steuersignal in Abhängigkeit von den festgestellten Vorzeichen vergrößert oder verkleinert wird, und

c) der bei der Differenz Null erreichte Steuersignalwert für die spätere Vorlagen-Abtastung festgehalten wird.

28. Verfahren nach Anspruch 26 und 27, dadurch gekennzeichnet, daß in jedem Farbkanal

a) in Abhängigkeit von den festgestellten Vorzeichen der Differenz Takte in einen Zähler eingezählt oder aus dem Zähler ausgezählt werden,

b) der jeweilige Zählerstand in das Steuersignal ($U_{SH}$) umgewandelt wird, und

c) der Zählerstand bei der Differenz Null fixiert wird.

29. Verfahren nach einem der Ansprüche 23–28, dadurch gekennzeichnet, daß

a) das Farb-Abtastorgan ein Abtast-Objektiv (9) und eine Abtast-Blende (10) aufweist, und

b) die Irisblende (22) in der Nähe des Abtast-Objektivs (9), vorzugsweise im Abtast-Objektiv (9), angeordnet ist.

30. Verfahren nach einem der Ansprüche 23–29, dadurch gekennzeichnet, daß die Meßvorrichtung (25; 26) zwischen Irisblende (22) und Abtast-Blende (10) angeordnet ist

31. Verfahren nach einem der Ansprüche 20–30, dadurch gekennzeichnet, daß in den Licht/Spannungs-Wandlereinrichtungen (12R; 12G; 12B) Photomultiplier verwendet werden.

32. Einrichtung zum Weiß-Abgleich der Licht/Spannungs-Wandlereinrichtungen eines Farb-Abtastorgans zur punkt- und zeilenweisen Abtastung von Farbvorlagen, bestehend aus

a) einer Abtast-Lichtquelle (5) zur Beleuchtung der Farbvorlagen,

b) einem Farb-Abtastorgan, welches ein Abtast-Objektiv (9), eine Abtast Blende (10), Mittel (75; 76; 77; 81R; 81B) zur Aufspaltung des mit den Dichtewerten der Farbvorlage modulierten Abtastlichts in Farbanteile der Farbkanäle und Licht/Spannungs-Wandlereinrichtungen (12R; 12G; 12B) für die Farbkanäle zur Umwandlung der Farbanteile in Farbsignale enthält, und aus

c) Schaltungsanordnungen (29R; 29G; 29B) für die Farbkanäle zur Einstellung der Empfindlichkeit bzw. des Verstärkungsgrades der zugehörigen Licht/Spannungs-Wandlereinrichtungen (12R; 12G; 12B), deren Steuereingänge mit den Ausgängen der zugehörigen Schaltungsanordnungen (29R; 29G; 29B) und deren Ausgänge mit den ersten Eingängen der Schaltungsanordnungen (29R; 29G; 29B) verbunden sind, wobei die zweiten Eingänge der Schaltungsanordnungen (29R; 29G; 29B) mit Bezugssignalwerten ($U_{BSoll}$) für die Farbsignale der betreffenden Farbkanäle beaufschlagbar sind, gekennzeichnet durch,

d) einen durch ein Steuersignal ($U_{SV}$) steuerbaren Lichtabschwächer (22; 23; 37), welcher im Strahlengang des Farb-Abtastorgans (3) vor der Abtast-Blende (10) angeordnet ist, zur Abschwächung desjenigen Lichtanteils des von der Abtast-Lichtquelle (5) erzeugten Lichts, der den Licht/Spannungs-Wandlereinrichtungen (12) ohne Abtastung der Farbvorlage zugeführt wird,

e) eine Licht-Meßvorrichtung (12 bzw. 25; 26; 38) im Strahlengang des Farb-Abtastorgans (3) zur Messung der Lichtleistung ($U_{LO}$; $U_{LIst}$) des jeweils durch den Lichtabschwächer (22; 23; 37) hindurchtretenden Lichtanteils, und

f) eine Lichtregelungs-Schaltung (28; 30; 31) zur Erzeugung des Steuersignals ($U_{SV}$), deren Ausgang mit dem Steuereingang des Lichtabschwächers (22; 23; 37) und deren erster Eingang mit der Licht-Meßeinrichtung (12 bzw. 25; 26; 38) verbunden ist, wobei deren zweiter Eingang mit dem vorgebbaren Licht-Abschwächungsfaktor (KL) beaufschlagbar ist.

33. Einrichtung nach Anspruch 32, dadurch gekennzeichnet, daß als Licht-Meßeinrichtung die Licht/Spannungs-Wandlereinrichtung (12R; 12G; 12B) in einem der Farbkanäle verwendet wird

34. Einrichtung nach Anspruch 32, dadurch gekennzeichnet, daß die Licht-Meßeinrichtung (25; 26; 38) zwischen dem Lichtabschwächer (22; 23; 37) und den Licht/Spannungs-Wandlereinrichtungen (12R; 12G; 12B) angeordnet ist.

35. Einrichtung nach einem der Ansprüche 12–34, dadurch gekennzeichnet, daß eine Korrekturwert-Stufe (60) vorgesehen ist, deren Eingänge mit der Lichtregelungs-Schaltung (28; 30; 31) verbunden sind und deren Ausgang wahlweise an den zweiten Eingang einer der Schaltungsanordnungen (29R; 29G; 29B) in den Farbkanälen anschließbar ist.

36. Einrichtung nach einem der Ansprüche 32–35, dadurch gekennzeichnet, daß der Lichtabschwächer (22; 23; 37) eine verstellbare Irisblende (22) und einen Stellmotor (23) für die Irisblende (22) aufweist.

## Claims

1. Process for white balancing the light/voltage converting unit of scanning device for image-point and line-by-line scanning of an original illuminated by means of a scanning light source and for converting the scanning light modulated by means of the density values of the scanned original into an electric image signal ($U_B$), in which prior to scanning of the original

a) light is produced with a light output corresponding to the light output of the scanning light emanating from the brightest point of the original, the white point, and the light produced is converted in the light/voltage converting unit (12) into an image signal value ($U_B$),

b) the image signal value ($U_B$) of the white point is measured and compared with a reference signal value ($U_{BSoll}$) which the image signal value ($U_B$) of the white point is to reach, and

c) in which by changing the sensitivity or gain, respectively, of the light/voltage converting unit (12) the image signal value ($U_B$) of the white point is set to the reference signal value ($U_{BSoll}$), characterised in that

d) the transmittance of the white point of a translucent original or the reflectance of the white point of a reflective original is determined and stored as light attenuation factor ($K_L$),

e) the light output ($U_{LO}$) of that fraction of light of the light produced by scanning light source (5), which is fed to the light/voltage converting unit (12) without scanning the original, is measured, and from the measured light output ($U_{LO}$) and the light attenuation factor ($K_L$) a set value of the light output ($U_{LSoll}$) is calculated in respect of the scanning light, said set value of the light output corresponding to light output ($U_L$) of the scanning light emanating from the white point of the original, and

f) the measured light fraction is attenuated by dimming, and the image signal value ($U_B$) obtained by means of the attenuated light fraction is adjusted to the reference signal value ($U_{BSoll}$).

2. Process according to claim 1, characterised in that the measured light fraction is attenuated to the set value of the light output ($U_{LSoll}$).

3. Process according to claim 1, characterised in that

a) attenuation of the measured light fraction is discontinued prior to reaching the set value of the light output ($U_{LSoll}$),

b) a correction factor ($K_U$) is determined from the light output ($U_L$) of the attenuated light fraction present at the moment of discontinuation and from the calculated set value of the light output ($U_{LSoll}$), and

c) the reference signal value ($U_{BSoll}$) for image signal ($U_B$) is corrected in accordance with correction factor ($K_U$), whereupon, with a view to compensating the inaccuracy due to discontinuing the process of light attenuation, the image signal value ($U_B$) produced by means of the attenuated light fraction is set to the corrected reference signal value ($U'_{BSoll}$).

4. Process according to one of claims 1–3, characterised in that

a) attenuation of the measured light fraction is carried out with the aid of an iris diaphragm (22) arranged in the optical path of scanning device (3), the aperture of said iris diaphragm being changed by a control signal ($U_{SV}$),

b) the light output ($U_{LO}$) of the measured light fraction passing through the fully opened iris diaphragm (22) is measured,

c) when attenuating the measured light fraction passing through the iris diaphragm (22), the light output of the light fraction passing through the given aperture is measured as actual value of the light output ($U_{LIst}$), the difference between set value of the light output ($U_{LSoll}$) and actual value of the light output ($U_{LIst}$) is formed continuously and used as a control signal ($U_{SV}$) for iris diaphragm (22), and

d) iris diaphragm (22) is again fully opened after completion of the white balancing process.

5. Process according to one of claims 1–4, characterised in that the light output of the light fraction is measured with the aid of an optical-electric measuring device (25; 26) arranged within the optical path of scanning device (3).

6. Process according to one of claims 1–4, characterised in that the light output of the light fraction is measured with the aid of light/voltage converting unit (12).

7. Process according to one of claims 1–6, characterised in that

a) the sensitivity or gain, respectively, of light/voltage converting unit (12) is modified by a control signal ($U_{SH}$), and

b) actual values of the image signal ($U_{BIst}$) are measured, the difference between the actual values of the image signal ($U_{BIst}$) and the preset or corrected reference signal value ($U_{BSoll}$; $U'_{BSoll}$) is formed continuously and the control signal

(U$_{SH}$) for the light/voltage converting unit (12) is derived from the difference.

8. Process according to claim 7, characterised in that

a) the given sign of the difference is determined,

b) control signal (U$_{SH}$) for light/voltage converting unit (12) is magnified or reduced in accordance of the signs determined, and

c) the control signal value obtained at difference zero is stored for subsequent scanning of originals.

9. Process according to claims 7 and 8, characterised in that

a) clock pulses are counted into a counter (57) or counted out of counter (57), depending on the sign determined,

b) the given counter status is converted into control signal (U$_{SH}$) and

c) the counter status at difference zero is secured.

10. Process according to one of claims 4–9, characterised in that

a) scanning device (3) comprises a scanning objective (9) and a scanning diaphragm (10), and

b) iris diaphragm (22) is arranged in the vicinity of scanning objective (9), preferably within scanning objective (9).

11. Process according to one of claims 5–10, characterised in that the optical-electric measuring device (25; 26) is arranged between iris diaphragm (22) and scanning diaphragm (10).

12. Process according to one of claims 1–11, characterised in that a photomultiplier (13) is used by way of light/voltage converting unit (12).

13. Process according to one of claims 1–3 or 5–12, characterised in that

a) attenuation of the measured light fraction is effected with the aid of an iris diaphragm (22) arranged within the optical path of scanning device (3), the aperture of said iris diaphragm being modified by a control signal (U$_{SV}$),

b) light output (U$_{LO}$) of the light fraction passing through the fully opened iris aperture (22) is measured,

c) in the course of attenuating the measured light fraction passing through iris diaphragm (22), a potentiometer (70) is adjusted while altering the aperture, the picked up voltage value of which is a measure of the actual aperture at the given moment,

d) the light attenuation factor (K$_L$) is converted to a set aperture at which the measured light fraction is attenuated in accordance with light attenuation factor (K$_L$), and

e) the difference of set aperture and actual aperture is formed and used by way of control signal (U$_{SV}$) for iris diaphragm (22).

14. Device for white balancing the light/voltage converting unit of a scanning device for image-point and line-by-line scanning of black/white originals, comprising

a) a scanning light source (5) for illuminating the black/white originals,

b) a scanning device (3) containing a scanning objective (9), a scanning diaphragm (10) and a light/voltage converting unit (12) for converting the scanning light to an image signal (U$_B$), and

c) a circuit arrangement (29) for setting the sensitivity or gain, respectively, of the light/voltage converting unit (12), the control input of said circuit arrangement being linked with the output of circuit arrangement (29), while its output is linked with the first input of circuit arrangement (29), whereby a reference signal value (U$_{BSoll}$) for image signal (U$_B$) can be applied to the second input of circuit arrangement (29), characterised by

d) a light attenuator (22; 23; 37) capable of being controlled by a control signal (U$_{SV}$), said light attenuator being arranged upstream of scanning diaphragm (10) within the optical path of scanning device (3), with a view to attenuating that light fraction of the light produced by scanning source (5) which is fed to light/voltage converting unit (12) without scanning the original,

e) a light measuring device (12 or 25; 26; 38) within the optical path of scanning device (3) for measuring light output (U$_{LO}$; U$_{LIst}$) of the light fraction passing through light attenuator (22; 23; 37) at the given moment, and

f) a light control circuit (28; 30; 31) for generating control signal (U$_{SV}$), the output of said circuit being linked with the control input of light attenuator (22; 23; 37), while its first input is linked with light measuring device (12 or 25; 26; 38), whereby light attenuation factor (K$_L$), which can be preselected, can be applied to the second input of said light regulating circuit.

15. Device according to claim 14, characterised in that the light measuring device (25; 26; 38) is arranged between light attenuator (22; 23; 37) and light/voltage converting unit (12).

16. Device according to claim 14, characterised in that the light/voltage converting unit (12) is used by way of light measuring device.

17. Device according to one of claims 14–16, characterised by a correction value stage (60), the inputs of which are connected to light regulating circuit (28; 30; 31) while their output is connected to the second input of circuit arrangement (29), with a view to correcting the reference signal value (U$_{BSoll}$) for image signal (U$_B$).

18. Device according to one of claims 14–17, characterised in that the light attenuator comprises and adjustable iris diaphragm (22) and a servo-motor (23) for iris aperture (22).

19. Device according to claim 18, characterised in that the light attenuator comprises, in addition, a potentiometer (70) capable of being adjusted by servo-motor (23), for generating a signal which represents the given aperture of iris diaphragm (22).

20. Process for white balancing of the light/voltage converting units of a colour scanning device for image-point and line-by-line scanning of a colour original illuminated by a scanning light source, with a view to splitting the scanning light modulated by means of the density values of the colour original into colour contents for every colour channel and to converting the colour contents of the colour channels into electric colour signals, in which prior to scanning of originals

a) light is produced with a light output corresponding to the light output of the scanning light emanating from the brightest point of the colour original, the white point, and the light produced is converted in the light/voltage converting units (12R; 12G; 12B) to colour signal values ($U_{BR}$; $U_{BG}$; $U_{BB}$),

b) the colour signal values ($U_{BR}$; $U_{BG}$; $U_{BB}$) of the white point are measured and compared with the reference signal values ($U_{BSoll}$) allocated to the individual colour channels, which the colour signal values ($U_{BR}$; $U_{BG}$; $U_{BB}$) of the white point are to reach, and

c) in which by modifying the sensitivity or gain, respectively, of the light/voltage converting units (12R; 12G; 12B) the colour signal values ($U_{BR}$; $U_{BG}$: $U_{BB}$) of the white point are set to the corresponding reference signal values ($U_{BSoll}$), characterised in that

d) the transmittance of the white point of a translucent colour original or the reflectance of the white point of a reflective colour original is determined and stored by way of light attenuation factor ($K_L$),

e) the light output ($U_{LO}$) of that light fraction of the light produced by scanning light source (5) is measured, which is fed to the light/voltage converting units (12R; 12G; 12B) without scanning the colour original, and a set value of the light output ($U_{LSoll}$) is calculated from the measured light output ($U_{LO}$) and light attenuation factor ($K_L$), which corresponds to the light output of the scanning light emanating from the colour original, and

f) the measured light fraction is attenuated by dimming, whereupon the colour signal values ($U_{BR}$; $U_{BG}$; $U_{BB}$) obtained by means of the attenuated light fraction are adjusted to the appropriate reference signal values ($U_{BSoll}$).

21. Process according to claim 20, characterised in that the measured light fraction is attenuated to the set value of the light output ($U_{LSoll}$).

22. Process according to claim 20, characterised in that

a) attenuation of the measured light fraction is discontinued prior to reaching the set value of the light output ($U_{LSoll}$),

b) a correction factor ($K_U$) is determined from the light output ($U_L$) of the attenuated light fraction present at the moment of discontinuation and the calculated set value of the light output ($U_{LSoll}$),

c) the reference values ($U_{BSoll}$) for colour signals ($U_{BR}$; $U_{BG}$; $U_{BB}$) are corrected in accordance with correction factor ($K_U$) and then adjusted, with a view to compensating the inaccuracy due to discontinuing the light attenuation, the colour signal values ($U_{BR}$; $U_{BG}$; $U_{BB}$) being generated by means of the attenuated light fraction to the corrected reference signal values ($U'_{BSoll}$).

23. Process according to one of claims 20–22, characterised in that

a) attenuation of the measured light fraction is effected with the aid of an iris diaphragm (22) arranged in the optical path of the colour scanning device, the aperture of which is modified by a control signal ($U_{SV}$),

b) the light output ($U_{LO}$) of the light fraction passing through the fully opened iris diaphragm (22) is measured,

c) in the course of attenuating the measured light fraction passing through iris diaphragm (22), the light output of the light fraction passing through the given aperture is measured by way of actual light output value ($U_{LIst}$), while continuously forming the difference of the set value of the light output ($U_{LSoll}$) and the actual value of the light output ($U_{LIst}$) and used by way of control signal ($U_{SV}$) for iris diaphragm (22),

d) iris diaphragm (22) is again fully opened once the white balancing operation has been completed.

24. Process according to one of claims 20–23, chartered in that the light output of the light fraction is measured with the aid of an optical-electric measuring device (25; 26) arranged within the optical path of the colour scanning device.

25. Process according to one of claims 20–23, characterized in that the light output of the light fraction is measured with the aid of one of the light/voltage converting units (12R; 12G; 12B).

26. Process according to one of claims 20–24, characterised in that in every colour channel

a) the sensitivity or gain factor, respectively, of the light/voltage-converting unit (12R; 12G; 12B) of the colour channel concerned is modified by a control signal ($U_{SH}$), and

b) actual values of the colour signal are measured and the difference of the actual values of the colour signal and the preset or corrected reference signal value ($U_{BSoll}$; $U_{BSoll}$) is formed, control signal ($U_{SH}$) being derived from the difference.

27. Process according to claim 26, characterised in that in every colour channel

a) the given sign of the difference is determined,

b) the control signal is magnified or reduced as a function of the signs determined,

c) the control signal value reached at difference zero is stored for subsequent scanning of originals.

28. Process according to claims 26 and 27, characterised in that in every colour channel

a) clock pulses are counted into a counter or counted out of the counter, as a function of the signs of the difference determined,

b) the momentary counter status is converted to control signal ($U_{SH}$) and

c) the counter status at difference zero is retained.

29. Process according to one of claims 23–28, characterised in that

a) the colour scanning device comprises a scanning objective (9) and a scanning diaphragm (10), and

b) iris diaphragm (22) is arranged in the vicinity of scanning objective (9), preferably within scanning objective (9).

30. Process according to one of claims 23–29, characterised in that the measuring device (25; 26) is arranged between iris diaphragm (22) and scanning diaphragm (10).

31. Process according to one of claims 20–30, characterised in that photomultipliers are used in the light/voltage converting units (12R; 12G; 12B)

32. Device for white balancing of the light/voltage converting units of a colour scanning device for image-point and line-by-line scanning of colour originals, consisting of

a) a scanning light source (5) for illuminating the colour originals,

b) a colour scanning device comprising a scanning objective (9), a scanning diaphragm (10), means (75; 76; 81R; 81G; 81B) for splitting the scanning light modulated by means of the density values of the colour original into colour contents of the colour channels and light voltage converting units (12R; 12G; 12B) for the colour channels with a view to converting the colour contents into colour signals, and

c) circuit arrangements (29R; 29G; 29B) for the colour channels for setting the sensitivity or gain factor, respectively, of the corresponding light/voltage converting units (12R; 12G; 12B), the control inputs of which are linked with the outputs of the corresponding circuit arrangements (29R; 29G; 29B) and the outputs of which are linked with the first inputs of the circuit arrangements (29R; 29G; 29B), whereby reference signal values (U$_{BSoll}$) for the colour signals of the corresponding colour channels can be applied to the second inputs of the circuit arrangements (29R; 29G; 29B), characterised by:

d) a light attenuator (22; 23; 37) which can be controlled by a control signal (U$_{SV}$) and which is arranged upstream of scanning diaphragm (10) in the optical path of colour scanning device (3), with a view to attenuating that light fraction of the light produced by scanning light source (5), which is fed to the light/voltage converting units (12) without scanning the colour original,

e) a light measuring device (12 or 25; 26; 38) in the optical path of colour scanning device (3) for measuring the light output (U$_{LO}$; U$_{LIst}$) of the light fraction passing at the given moment through light attenuator (22; 23; 37), and

f) a light regulation circuit (28; 30; 31) for generating the control signal (U$_{SV}$), the output of which is linked with the control input of light attenuator (22; 23; 37) and the first input of which is linked with light measuring device (12 or 25; 26; 38), respectively, whereby the light attenuation factor (K$_L$), which can be preset, may be applied to its second input.

33. Device according to claim 32, characterised in that the light/voltage converting unit (12R; 12G; 12B) in one of the colour channels is used by way of light measuring device.

34. Device according to claim 32, characterised in that the light measuring device (25; 26; 38) is arranged between light attenuator (22; 23; 37) and light/voltage converting units (12R; 12G; 12B).

35. Device according to one of claims 12–34, characterised in that a correction value stage (60) is provided, the inputs of which are linked with light regulation circuit (28; 30; 31) and the output of which can be optionally connected to the second input of one of the circuit arrangements (29R; 29G; 29B) in the colour channels.

36. Device according to one of claims 32–35, characterised in that light attenuator (22; 23; 37) comprises an adjustable iris diaphragm (22) and a servomotor (23) for iris diaphragm (22).

**Revendications**

1. Procédé pour l'ajustage du niveau de blanc du dispositif convertisseur lumière/tension de l'organe d'exploration pour l'exploration par points et par lignes d'un modèle éclairé par une source de lumière d'exploration et pour convertir la lumière d'exploration modulée par les valeurs de densité du modèle ainsi exploré en un signal électrique d'image (U$_B$), procédé dans lequel, avant l'exploration du modèle:

a) de la lumière est produite avec une puissance lumineuse qui correspond à la puissance lumineuse de la lumière d'exploration émanant de l'emplacement le plus clair du modèle, le point blanc, et la lumière ainsi produite est convertie dans l'appareil de conversion lumière/tension (12) en une valeur de signal d'image (U$_B$),

b) la valeur de signal d'image (U$_B$) du point blanc est mesurée et est comparée avec une valeur de signal de référence (U$_{BSoll}$) que doit atteindre la valeur de signal d'image (U$_B$) du point blanc,

c) procédé dans lequel par modification de la sensibilité ou bien de l'amplification de l'appareil de conversion lumière/tension (12), la valeur de signal d'image (U$_B$) du point blanc est réglée à la valeur du signal de référence (U$_{BSoll}$), procédé caractérisé en ce que:

d) le taux de transmission du point blanc d'un modèle vu par transparence ou bien le taux de réflexion du point blanc d'un modèle opaque est déterminé et maintenu en tant que facteur d'affaiblissement de la lumière (K$_L$),

e) la puissance lumineuse (U$_{LO}$) de la fraction de la lumière obtenue à partir de la source de lumière d'exploration (5) et qui est amenée à l'appareil de conversion lumière/tension (12) sans exploration du modèle, est mesurée et à partir de cette puissance lumineuse ainsi mesurée (U$_{LO}$) et du facteur (K$_L$) d'affaiblissement de la lumière, une valeur de consigne (U$_{LSoll}$) de la puissance lumineuse pour la lumière d'exploration est calculée, qui correspond à la puissance lumineuse (U$_L$) de la lumière d'exploration émanant du point blanc du modèle,

f) cette fraction de lumière ainsi mesurée et affaiblie par diaphragmation et la valeur (U$_B$) du signal d'image obtenue par cette fraction de lumière affaiblie, est réglée sur la valeur du signal de référence (U$_{BSoll}$).

2. Procédé selon la revendication 1, caractérisé en ce que la fraction de lumière ainsi mesurée est affaiblie à la valeur de consigne ($U_{LSoll}$) de la puissance lumineuse.

3. Procédé selon la revendication 1, caractérisé en ce que:

a) l'affaiblissement de la fraction de lumière ainsi mesurée est interrompu avant que la valeur de consigne ($U_{LSoll}$) de la puissance lumineuse soit atteinte,

b) à partir de la puissance lumineuse ($U_L$) de cette fraction de lumière affaiblie, présente lors de l'interruption, et à partir de la valeur de consigne calculée ($U_{LSoll}$) de la puissance lumineuse, un facteur de correction ($K_U$) est déterminé,

c) la valeur du signal de référence ($U_{BSoll}$) pour le signal d'image ($U_B$) est corrigée de façon correspondante au facteur de correction ($K_U$) et ensuite, pour compenser l'imprécision dûe à l'interruption de l'affaiblissement de la lumière, la valeur du signal d'image ($U_B$) obtenue avec la fraction de lumière affaiblie, est réglée à la valeur corrigée ($U'_{BSoll}$) du signal de référence.

4. Procédé selon une des revendications 1 à 3, caractérisé en ce que:

a) l'affaiblissement de la fraction de lumière mesurée est réalisé à l'aide d'un diaphragme à iris (22) disposé sur le trajet du faisceau de l'organe d'exploration (3), l'ouverture de ce diaphragme étant modifiée par un signal de commande ($U_{SV}$),

b) la puissance lumineuse ($U_{LO}$) de la fraction de lumière mesurée est mesurée à travers le diaphragme à iris (22) complètement ouvert,

c) lors de l'affaiblissement de la fraction de lumière mesurée par le diaphragme à iris (22), la puissance lumineuse de la fraction de lumière passant à travers l'ouverture du diaphragme à ce moment, est mesurée en tant que valeur réelle ($U_{LIst}$) de la puissance lumineuse, la différence entre la valeur de consigne ($U_{LSoll}$) de la puissance lumineuse et la valeur réelle ($U_{LIst}$) de la puissance lumineuse est formée en continu et est utilisée comme signal de commande ($U_{SV}$) pour le diaphragme à iris (22).

d) le diaphragme à iris (22) est à nouveau complètement ouvert après la réalisation de l'ajustage du niveau de blanc.

5. Procédé selon une des revendications 1 à 4, caractérisé en ce que la mesure de la puissance lumineuse de la fraction de lumière, est réalisée à l'aide d'un dispositif de mesure optique et électrique (25; 26) disposé sur le trajet du faisceau de l'organe d'exploration (3).

6. Procédé selon une des revendications 1 à 4, caractérisé en ce que la mesure de la puissance lumineuse de la fraction de lumière, est réalisée à l'aide de l'appareil de conversion lumière/tension (12).

7. Procédé selon une des revendications 1 à 6, caractérisé en ce que:

a) la sensibilité ou bien l'amplification du dispositif de conversion lumière/tension (12) est modifiée par un signal de commande ($U_{SH}$),

b) des valeurs réelles ($U_{BIst}$) du signal d'image sont mesurées, la différence entre ces valeurs réelles ($U_{BIst}$) du signal d'image et la valeur du signal de référence prédéfini ou bien corrigé ($U_{BSoll}$; $U'_{BSoll}$) est formée en continu et à partir de cette différence, le signal de commande ($U_{SH}$) pour l'appareil de conversion lumière/tension (12) est dérivé.

8. Procédé selon la revendication 7, caractérisé en ce que:

a) le signe de la différence au moment considéré, est déterminé,

b) le signal de commande ($U_{SH}$) pour l'appareil de conversion lumière/tension (12) est augmenté ou bien diminué en fonction du signe ainsi déterminé,

c) la valeur du signal de commande atteinte pour une différence nulle, est retenue pour l'exploration ultérieure du modèle.

9. Procédé selon les revendications 7 et 8, caractérisé en ce que:

a) en fonction du signe ainsi déterminé de la différence, des impulsions sont introduites dans un compteur (57) ou bien extraites du compteur (57),

b) l'état du compteur au moment considéré est converti en signal de commande ($U_{SH}$),

c) l'état du compteur pour une différence nulle est fixe.

10. Procédé selon une des revendications 4 à 9, caractérisé en ce que:

a) l'organe d'exploration (3) comporte un objectif d'exploration (P) et un diaphragme d'exploration (10),

b) le diaphragme à iris (22) est disposé au voisinage de l'objectif d'exploration (9) de préférence dans cet objectif d'exploration (9).

11. Procédé selon une des revendications 5 à 10, caractérisé en ce que l'appareil optique et électrique de mesure (25; 26) est disposé entre le diaphragme à iris (22) et le diaphragme d'exploration (10).

12. Procédé selon une des revendications 1 à 11, caractérisé en ce qu'un photo-multiplicateur (13) est utilisé comme appareil de conversion lumière/tension (12).

13. Procédé selon une des revendications 1 à 3 ou bien 5 à 12, caractérisé en ce que:

a) l'affaiblissement de la fraction de lumière mesurée est réalisé à l'aide d'un diaphragme à iris (22) disposé sur le trajet du faisceau de l'organe d'exploration (3), d'ouverture de ce diaphragme étant modifiée par un signal de commande ($U_{SV}$),

b) la puissance lumineuse ($U_{LO}$) de la fraction de lumière est mesurée à travers le diaphragme à iris (22) complètement ouvert,

c) lors de l'affaiblissement de la fraction de lumière mesurée par le diaphragme à iris (22), un potentiomètre (70) est réglé en même temps qu'est modifiée l'ouverture du diaphragme, la valeur de tension prélevée sur ce potentiomètre constituant une mesure pour l'ouverture réelle du diaphragme au moment considéré,

d) le facteur d'affaiblissement de la lumière ($K_L$) est converti par le calcul en une ouverture de consigne du diaphragme, pour laquelle la fraction de lumière mesurée est affaible de façon correspondante au facteur d'affaiblissement de la lumière (KL),

e) la différence entre l'ouverture de consigne du diaphragme et l'ouverture réelle du diaphragme est formée et est utilisée comme signal de commande ($U_{SV}$) pour le diaphragme à iris (22).

14. Appareil pour l'ajustage du niveau de blanc du dispositif de conversion lumière/tension d'un organe d'exploration pour l'exploration par points et par lignes des modèles noir/blanc, dispositif constitué par:

a) une source de lumière d'exploration (5) pour l'éclairage du modèle noir/blanc,

b) un organe d'exploration (3) comportant un objectif d'exploration (9), un diaphragme d'exploration (10) et un appareil de conversion lumière/tension (12) pour convertir la lumière d'exploration en un signal d'image ($U_B$),

c) un dispositif de circuit (29) pour le réglage de la sensibilité ou bien de l'amplification de l'appareil de conversion lumière/tension (12), dont l'entrée de commande est reliée à la sortie du dispositif de circuit (29) et dont la sortie est reliée à la première entrée du dispositif de circuit (29), tandis qu'à la seconde entrée du dispositif de circuit (29) est susceptible d'être appliquée une valeur de signal de référence ($U_{BSoll}$) pour de signal d'image ($U_B$), dispositif caractérisé en ce que:

d) un dispositif d'affaiblissement de la lumière (22; 23; 37) commandé par un signal de commande ($U_{SV}$) qui est disposé sur le trajet du faisceau de l'organe d'exploration (3) avant le diaphragme d'exploration (10), pour affaiblir la fraction de la lumière obtenue à partir de la source de lumière d'exploration (5) qui est amenée à l'appareil de conversion lumière/tension (12) sans exploration du modèle,

e) un appareil de mesure de la lumière (12 ou bien 25; 26; 38) sur le trajet du faisceau de l'organe d'exploration (3) pour mesurer la puissance lumineuse ($U_{LO}$; $U_{LIst}$) de la fraction de lumière traversant le dispositif d'affaiblissement de la lumière (22; 23; 37),

f) un circuit de régulation de la lumière (28; 30; 31) pour obtenir le signal de commande ($U_{SV}$) dont la sortie est reliée à l'entrée de commande de l'appareil (22; 23; 37) d'affaiblissement de la lumière et dont la première entrée est reliée à l'appareil de mesure de la lumière (12 ou bien 25; 26; 38), tandis qu'à sa seconde entrée, est susceptible d'être appliqué le facteur d'affaiblissement de la lumière ($K_L$) susceptible d'être prédéfini.

15. Appareil selon la revendication 14, caractérisé en ce que le dispositif de mesure de la lumière (25; 26; 38) est disposé entre le dispositif d'affaiblissement de la lumière (22; 23; 37) et l'appareil de conversion lumière/tension (12).

16. Appareil selon la revendication 14, caractérisé en ce que l'appareil de conversion lumière/tension (12) est utilisé comme dispositif de mesure de la lumière.

17. Appareil selon une des revendications 14 à 16, caractérisé en ce qu'il comporte un étage de valeur de correction (60) dont les entrées sont raccordées au circuit de régulation de la lumière (28; 30; 31) et dont la sortie est raccordée à la seconde entrée du dispositif de circuit (29) pour corriger la valeur du signal de référence ($U_{BSoll}$) pour le signal d'image ($U_B$).

18. Appareil selon une des revendications 14 à 17, caractérisé en ce que le dispositif d'affaiblissement de la lumière comporte un diaphragme à iris réglable (22) et un moteur de réglage (23) pour ce diaphragme à iris (22).

19. Appareil selon la revendication 18, caractérisé en ce que le dispositif d'affaiblissement de la lumière comporte, en outre, un potentiomètre (70) susceptible d'être réglé par le moteur de réglage (23) pour obtenir un signal représentant l'ouverture au moment considéré du diaphragme à iris (22).

20. Procédé pour l'ajustage du niveau de blanc des appareils de conversion lumière/tension d'un organe d'exploration en couleur pour l'exploration par points et par lignes d'un modèle en couleurs éclairé par une source de lumière d'exploration, pour la décomposition de la lumière d'exploration modulée avec les valeurs de densité du modèle en couleur en composantes de couleurs pour chaque canal de couleurs et pour la conversion de ces composantes de couleurs des canaux de couleurs, en signaux électriques de couleurs, procédé dans lequel, avant l'exploration du modèle:

a) la lumière est produite avec une puissance lumineuse qui correspond à la puissance lumineuse de la lumière d'exploration émanant de l'emplacement le plus clair du modèle en couleurs, le point blanc, et la lumière ainsi obtenue est convertie dans les appareils de conversion lumière/tension (12R; 12G; 12B) en valeur de signal de couleurs ($U_{BR}$; $U_{BG}$; $U_{BB}$),

b) les valeurs de signal de couleurs ($U_{BR}$; $U_{BG}$; $U_{BB}$) du point blanc sont mesurées et sont comparées avec les valeurs de signal de référence ($U_{BSoll}$) associées aux différents canaux de couleurs, qui doivent atteindre les valeurs de signal de couleurs ($U_{BR}$; $U_{BG}$; $U_{BB}$) du point blanc,

c) et dans lequel, par modification de la sensibilité ou bien de l'amplification des appareils de conversion lumière/tension (12R; 12G; 12B) les valeurs de signal de couleurs ($U_{BR}$; $U_{BG}$; $U_{BB}$) du point blanc, sont réglées sur les valeurs correspondantes du signal de référence ($U_{BSoll}$), procédé caractérisé en ce que:

d) le taux de transmission du point blanc d'un modèle en couleurs vu par transparence ou bien le taux de réflexion du point blanc d'un modèle en couleurs opaque, est déterminé et retenu en tant que facteur d'affaiblissement de la lumière ($K_L$),

e) la puissance lumineuse ($U_{LO}$) de la fraction de la lumière obtenue à partir de la source de lumière d'exploration (5) et qui est amenée à l'appareil de conversion lumière/tension (12R; 12G; 12B) sans exploration du modèle en couleurs, est mesurée et à partir de cette puissance lumineuse ($U_{LO}$) ainsi mesurée et du facteur d'affaiblissement de la lumière ($K_L$), une valeur de consigne de puissance lumineuse ($U_{LSoll}$) est mesurée qui correspond à la puissance lumineuse de la lumière d'exploration émanant du point blanc du modèle en couleurs.

f) la fraction de lumière ainsi mesurée est affaiblie par diaphragmation et ensuite les valeurs de signal de couleurs ($U_{BR}$; $U_{BG}$; $U_{BB}$) obtenues avec la fraction de lumière ainsi affaiblie, sont réglées sur les valeurs correspondantes du signal de référence ($U_{BSoll}$).

21. Procédé selon la revendication 20, caractérisé en ce que la fraction de lumière ainsi mesurée est affaiblie à la valeur de consigne de puissance lumineuse ($U_{LSoll}$).

22. Procédé selon la revendication 20, caractérisé en ce que:

a) l'affaiblissement de la fraction de lumière ainsi mesuré est interrompu avant qu'ait été atteinte la valeur de consigne de la puissance lumineuse ($U_{LSoll}$),

b) à partir de la puissance lumineuse ($U_L$) de la fraction de lumière affaiblie existant avant l'interruption, et à partir de la valeur de consigne calculée de la puissance lumineuse ($U_{LSoll}$), un facteur de correction ($K_U$) est déterminé,

c) les valeurs de signal de référence ($U_{BSoll}$) pour les signaux de couleurs ($U_{BR}$; $U_{BG}$; $U_{BB}$) sont corrigées de façon correspondante au facteur de correction ($K_U$) et ensuite, pour compenser l'imprécision dûe à l'interruption de l'affaiblissement de la lumière, les valeurs de signaux de couleurs ($U_{BR}$; $U_{BG}$; $U_{BB}$) obtenues avec la fraction de lumière affaiblie, sont réglées sur les valeurs corrigées ($U'_{BSoll}$) du signal de référence

23. Procédé selon une des revendications 20 à 22, caractérisé en ce que:

a) l'affaiblissement de la fraction de lumière mesurée est réalisé à l'aide d'un diaphragme à iris (22) disposé sur le trajet du faisceau de l'organe d'exploration en couleur, diaphragme dont l'ouverture est modifiée par un signal de commande ($U_{SV}$),

b) la puissance lumineuse ($U_{LO}$) de la fraction de lumière, est mesurée à travers le diaphragme à iris (22) complètement ouvert,

c) lors de l'affaiblissement de la fraction de lumière mesurée par le diaphragme à iris (22), la puissance lumineuse de la fraction de lumière passant à travers l'ouverture du diaphragme au moment considéré est mesurée en tant que valeur réelle ($U_{LIst}$) de la puissance lumineuse, la différence entre la valeur de consigne ($U_{LSoll}$) de la puissance lumineuse et la valeur réelle ($U_{LIst}$) de la puissance lumineuse est formée et utilisée en tant que signal de commande ($U_{SV}$) pour le diaphragme à iris (22),

d) le diaphragme à iris (22) est à nouveau ouvert complètement après que l'ajustage du niveau de blanc ait été effectué.

24. Procédé selon une des revendications 20 à 23, caractérisé en ce que la mesure de la puissance lumineuse de la fraction de lumière est réalisée à l'aide d'un dispositif optique et électrique de mesure (25; 26) disposé sur le trajet du faisceau lumineux de l'organe d'exploration en couleurs.

25. Procédé selon une des revendications 20 à 23, caractérisé en ce que la mesure de la puissance lumineuse de la fraction de lumière, est réalisée à l'aide de l'un des appareils de conversion lumière/tension (12R; 12G; 12B).

26. Procédé selon une des revendications 20 à 25, caractérisé en ce que dans chaque canal de couleurs:

a) la sensibilité ou bien le taux d'amplification de l'appareil de conversion lumière/tension (12R; 12G; 12B) du canal de couleurs considéré, est modifiée par un signal de commande ($U_{SH}$),

b) les valeurs réelles du signal de couleur sont mesurées et la différence entre ces valeurs réelles du signal de couleur et la valeur prédéfinie ou bien corrigée ($U_{BSoll}$; $U'_{BSoll}$) du signal de référence, est formée et à partir de cette différence, le signal de commande ($U_{SH}$) est dérivé.

27. Procédé selon la revendication 26, caractérisé en ce que dans chaque signal de couleur:

a) le signe de la différence au moment considéré est déterminé,

b) le signal de commande est augmenté ou diminué en fonction du signe ainsi déterminé,

c) la valeur du signal de commande atteinte pour une différence nulle est retenue pour l'exploration ultérieure du modèle.

28. Procédé selon les revendications 26 et 27, caractérisé en ce que dans chaque canal de couleur:

a) en fonction du signe ainsi déterminé de la différence, des impulsions sont introduites dans un compteur ou bien extraites de ce compteur,

b) l'état du compteur au moment considéré est converti en signal de commande ($U_{SH}$),

c) l'état du compteur est fixé pour une différence nulle.

29. Procédé selon une des revendications 23 à 28, caractérisé en ce que:

a) l'organe d'exploration en couleurs comporte un objectif d'exploration (9) et un diaphragme d'exploration (10),

b) le diaphragme à iris (22) est disposé au voisinage de l'objectif d'exploration (9), de préférence dans cet objectif d'exploration (9).

30. Procédé selon une des revendications 23 à 29, caractérisé en ce que le dispositif de mesure (25; 26) est disposé entre le diaphragme à iris (22) et le diaphragme d'exploration (10).

31. Procédé selon une des revendications 20 à 30, caractérisé en ce que des photo-multiplicateurs sont utilisés dans les appareils de conversion lumière/tension (12R; 12G, 12B).

32. Appareil pour l'ajustage du niveau de blanc des appareils de conversion lumière/tension d'un organe d'exploration en couleurs pour l'exploration par points et par lignes de modèles en couleurs, dispositif constitué par:

a) une source de lumière d'exploration (5) pour éclairer les modèles en couleurs,

b) un organe d'exploration en couleurs, qui comporte un objectif d'exploration (9), un diaphragme d'exploration (10), des moyens (75; 76; 77; 81R, 81G; 81B) pour la décomposition de la lumière d'exploration modulée par les valeurs de densité du modèle en couleurs en composantes de couleurs des canaux de couleurs, et des appareils de conversion lumière/tension (12R; 12G; 12B) pour les canaux de couleurs en vue de convertir les composantes de couleurs en signaux de couleurs,

c) des dispositifs de circuit (29R; 29G; 29B) pour les canaux de couleurs, en vue du réglage de la sensibilité ou bien du taux d'amplification des appareils de conversion lumière/couleurs (12R; 12G; 12B) correspondants, dont les entrées de commande sont reliées aux sorties des dispositifs de circuits correspondants (29R; 29G; 29B) et dont les sorties sont reliées aux premiéres entrées des dispositifs de circuits (29R; 29G; 29B), tandis qu'aux secondes entrées des dispositifs de circuits (29R; 29G; 29B) sont susceptibles d'être appliquées des valeurs de signal de référence ($U_{BSoll}$) pour les signaux de couleurs des canaux de couleurs correspondants, dispositif caractérisé en ce qu'il comporte:

d) un dispositif d'affaiblissement de la lumière (22; 23; 37) susceptible d'être commandé par un signal de commande ($U_{SV}$), et qui est disposé sur le trajet du faisceau de l'organe d'exploration en couleurs (3) avant le diaphragme d'exploration (10) pour affaiblir la fraction de la lumière obtenue à partir de la source de lumière d'exploration (5) qui est amenée aux appareils de conversion lumière/tension (12) sans exploration du modèle en couleurs,

e) un dispositif de mesure de la lumière (12 ou bien 25; 26; 38) disposé sur le trajet du faisceau de l'organe d'exploration en couleurs (3) pour mesurer la puissance lumineuse ($U_{LO}$; $U_{LIst}$) de la fraction de lumière traversant le dispositif d'affaiblissement de la lumière (22; 23; 37),

f) un circuit de régulation de la lumière (28; 30; 31) pour obtenir le signal de commande ($U_{SV}$), circuit dont la sortie est reliée à l'entrée de commande du dispositif d'affaiblissement de la lumière (22; 23; 37) et dont la première entrée est reliée aux dispositifs de mesure de la lumière (12 ou bien 25; 26; 38), tandis qu'à sa seconde entrée est susceptible d'être appliqué un facteur d'affaiblissement de la lumière ($K_L$) susceptible d'être prédéfini.

33. Appareil selon la revendication 32, caractérisé en ce que l'appareil de conversion lumière/tension (12R; 12G; 12B) est utilisé dans un des canaux de couleurs comme dispositif de mesure de la lumière.

34. Appareil selon la revendication 32, caractérisé en ce que l'appareil de mesure de la lumière (25; 26; 38) est disposé entre le dispositif d'affaiblissement de la lumière (22; 23; 37) et les appareils de conversion lumière/tension (12R; 12G; 12B).

35. Appareil selon une des revendications 12 à 34, caractérisé en ce qu'il est prévu un étage de valeur de correction (60) dont les entrées sont reliées au circuit de régulation de la lumière (28; 30; 31) et dont la sortie est susceptible d'être raccordée au choix à la deuxième entrèe de l'un des dispositifs de circuit (29R; 29G; 29B).

36. Appareil selon une des revendications 32 à 35, caractérisé en ce que le dispositif d'affaiblissement de la lumière (22; 23; 37) comporte un diaphragme à iris (22) réglable et un moteur de réglage (23) pour ce diaphragme à iris (22).

*Fig. 1*

*Fig. 2*

Fig. 3

*Fig. 4*

Fig. 5